# EUROPÄISCHE PATENTSCHRIFT

(11) **EP 2 313 273 B1**
(45) Veröffentlichungstag und Bekanntmachung des Hinweises auf die Patenterteilung: **31.12.2014**
(21) Anmeldenummer: 09781743.1
(22) Anmeldetag: 12.08.2009
(51) Int. Cl.: G01J 3/50, G01J 3/51, G01J 3/46, B41F 33/00

(54) **VERFAHREN ZUR FARBREGELUNG EINER DRUCKMASCHINE**
METHOD FOR REGULATING THE INK IN A PRINTING PRESS
PROCÉDÉ DE RÉGLAGE DES COULEURS D'UNE MACHINE À IMPRIMER

(30) Priorität: 21.08.2008 DE 102008041430
(43) Veröffentlichungstag der Anmeldung: 27.04.2011
(73) Patentinhaber: Koenig & Bauer Aktiengesellschaft, 97080 Würzburg (DE)
(72) Erfinder: HARTMANN, Felix, 33775 Versmold (DE); BUDACH, Stefan, Arthur, 32758 Detmold (DE); WILLEKE, Harald, Heinrich, 33102 Paderborn (DE)
(86) Internationale Anmeldenummer: PCT/EP2009/060428
(87) Internationale Veröffentlichungsnummer: WO 2010/020569

(56) Entgegenhaltungen:
- EP-A2- 0 356 705
- EP-A2- 0 741 026
- EP-A2- 2 008 818
- DE-A1- 4 431 270
- DE-A1-102008 045 661

## Beschreibung

Die Erfindung betrifft ein Verfahren zur Farbregelung einer Druckmaschine gemäß den Merkmalen des Anspruchs 1.

Durch die EP 0 741 026 A2 ist ein Verfahren zur Bildinspektion und Farbführung an Druckprodukten einer Druckmaschine bekannt, wobei vorzugsweise im online-Betrieb Ist-Bilddaten der Druckbilder der Druckprodukte ermittelt und mit Soll-Bilddaten zur Fehlerauffindung verglichen werden, wobei beim Auftreten eines Fehlers vor einer Veränderung der Farbführung geprüft wird, ob aufgrund der Fehlerart eine andere Ursache als die Farbführung für die Abweichung in Frage kommt. Das Verfahren geht davon aus, dass die Druckbilder der Druckprodukte in Zonen entsprechend der zonalen Teilung des Farbwerks gedanklich eingeteilt sind, wobei quer zu diesen Zonen wiederum gedankliche Abtrennungen erfolgen, so dass einzelne Felder entstehen. Innerhalb dieser Felder liegen Messorte einer optisch arbeitenden Erfassungseinrichtung. Einer der zu der Prüfung gehörenden Schritte betrifft den Vergleich von Feldern einer Zone mit Feldern von Nachbarzonen. Da für jede Zone und für jede Farbe Mess-/Regelfelder gewählt werden, können bei Fehlermeldung in einer Zone die äquivalenten Felder einer oder mehrerer Nachbarzonen zur Überprüfung herangezogen werden. Es wird erwarten, dass eine Farbabweichung in einer Zone in abgeschwächter Form in der Nachbarzone zu beobachten ist.

Durch die WO 2005/092613 A2 ist eine vorzugsweise im Mehrfarbendruck druckende Druckmaschine mit mindestens einem eine Dosiereinrichtung aufweisenden Farbwerk bekannt, wobei die Dosiereinrichtung des Farbwerks von einer Regeleinrichtung geregelt ist, wobei die Regeleinrichtung mit einer vorzugsweise optischen Erfassungseinrichtung verbunden ist, wobei die Erfassungseinrichtung mit einem auf eine Oberfläche eines in der Druckmaschine bedruckten Bedruckstoffes gerichteten Sensor die Qualität des Druckes erfasst.

Durch die EP 1 437 222 A1 ist ein Verfahren zum Drucken eines mehrere Messfelder aufweisenden Farbmessstreifens bekannt, wobei die in den einzelnen Messfeldern auf einem Bedruckstoff aufgetragenen Farbdichten gemessen und für eine Farbregelung einer Druckmaschine verwendet werden, wobei innerhalb einer selben längs zur Transportrichtung des Bedruckstoffes verlaufenden Farbzone quer zur Transportrichtung dieses Bedruckstoffes nebeneinander angeordnete Messfelder jeweils in drei Gruppen von Messfeldern angeordnet sind, wobei in jeder Gruppe den am Druck beteiligten Druckfarben zugeordnete Messfelder jeweils in derselben Reihenfolge nebeneinander angeordnet sind, wobei jeweils ein Verhältnis oder eine Differenz einer in einem Messfeld der mittleren Gruppe gemessenen Farbdichte einer bestimmten Farbe zu den beiden anderen jeweils in einem Messfeld der beiden anderen Gruppen gemessenen Farbdichten derselben Farbe gebildet wird, wobei geprüft wird, ob sich das ermittelte Verhältnis oder die ermittelte Differenz innerhalb zulässiger zuvor festgelegter Grenzen befindet. Ein außerhalb dieser festgelegten Grenzen liegendes Ergebnis wird z. B. als ein Tonen oder als ein Schmieren gewertet.

Durch die EP 1 084 843 A1 ist eine Vorrichtung zum densitometrischen Ausmessen von Druckprodukten bekannt, wobei mit vorgegebenen Sollwerten verrechnete Messergebnisse eines Densitometer-Messkopfes zu Stellbefehlen für eine Farbführung einer Druckmaschine verwendet werden, wobei durch eine dem Densitometer nachgeschaltete und eine Recheneinheit umfassende Auswerteeinheit ein Vergleich der Farbdichtewerte eines Messfeldes mit den benachbarten Messfeldern der gleichen Farbe und Messfeldart (Vollton bzw. Rasterton) vorgenommen wird.

Durch die DE 10 2004 003 612 A1 ist ein Verfahren zur Auswertung eines Bildes von einem vorbestimmten Ausschnitt eines Druckerzeugnisses bekannt, bei dem ein Bild von einem vorbestimmten Ausschnitt des Druckerzeugnisses von einer Kamera mit einem elektronischen Flächenbildsensor aufgenommen wird, bei dem ein von dem Bildsensor erfasstes Bild von einer elektronischen Auswertungseinheit ausgelesen und verarbeitet wird, wobei von ersten vorbestimmten Feldern innerhalb des Ausschnitts aufgenommene Intensitätssignale rechnerisch mit Referenzdatenwerten verknüpft werden, welche ein Maß für die Intensität der Lichtremission von unbedruckten Bereichen des Druckerzeugnisses darstellen, wobei zu Beginn ein Bild von einer Weißreferenz aufgenommen wird und von den Intensitätssignalen dieses Bildes Grundreferenzdaten für den gesamten Ausschnitt abgeleitet werden, wobei bei jeder Auswertung eines Bildes des vorbestimmten Ausschnitts aus von zweiten vorbestimmten Feldern innerhalb des Ausschnitts aufgenommenen Intensitätssignalen Korrekturdaten abgeleitet werden, und wobei vor der rechnerischen Verknüpfung der von den ersten vorbestimmten Feldern innerhalb des vorbestimmten Ausschnitts aufgenommenen Intensitätssignale mit den Referenzdaten letztere durch eine rechnerische Verknüpfung der Grundreferenzdaten mit den Korrekturdaten ermittelt werden.

Durch die DE 10 2004 021 601 A1 ist ein Verfahren zur Verwendung in einer Druckmaschine mit mindestens einem Farbwerk bekannt, wobei mindestens eine Einstellung des betreffenden Farbwerks in einem laufenden eine Oberfläche eines Bedruckstoffs bedruckenden Druckprozess der Druckmaschine anhand mindestens eines in diesem Druckprozess in der Druckmaschine erfassten Messwertes von einer Regeleinrichtung änderbar ist, wobei die Regeleinrichtung den erfassten Messwert vor einer Veränderung der Einstellung des betreffenden Farbwerks auf Plausibilität prüft. Für die Plausibilitätsprüfung der Messwerte werden z. B. Grenzwerte für eine Abweichung z. B. im Farbdichtebereich festgelegt, welche zwei aufeinander folgende oder örtlich benachbarte, zusammenliegende Messwerte nicht überschreiten dürfen.

Durch die DE 38 29 341 A1 ist ein Verfahren zum Erfassen von Daten eines Druckbildes für die Regelung der Farbzufuhr in Druckmaschinen unter Verwendung eines Densitometers zur Erzeugung der Daten, eines Speichers für die Sammlung der Daten oder Spektralphotometers und eines Rechners für die Auswertung der Daten zur Ansteuerung einer zonal aufgeteilten Farbdosiereinrichtung bekannt, wobei das Druckbild entsprechend seinem Aufbau in Bildzonen aufgeteilt wird, deren jede sich über unterschiedlich viele Zonen der Farbdosiereinrichtung erstrecken kann und wobei die Bildzonendaten in einem Bildzonenspeicher abgelegt werden, wobei im Bildbereich jeder Bildzone mit deren Densitometer bzw. Spektralphotometer Farbdichtewerte gemessen werden, wobei die so gewonnenen Daten dem Rechner übergeben werden, der sie auf Vollständigkeit und Richtigkeit überprüft, wobei die Daten bei erfolgreicher Prüfung in einem Bilddatenspeicher abgelegt, das Densitometer bzw. Spektralphotometer für die nächste Messung freigegeben und der nächste Schritt innerhalb eines Messzyklus angegeben wird, oder wobei bei nicht erfolgreicher Prüfung der Daten eine Fehlermeldung ausgegeben und das Densitometer noch einmal für den gleichen Schritt im Messzyklus freigegeben wird.

Durch die DE 35 43 444 A1 ist ein Verfahren zur Erzielung eines gleichförmigen Druckresultats an einer autotypisch arbeitenden Mehrfarbendruckmaschine bekannt, bei dem die Zufuhr der Druckfarben zu benachbarten Farbzonen eines Bedruckstoffs mittels Stellgliedern veränderbar ist und bei dem zur Regelung des Druckvorgangs an innerhalb der Farbzonen mitgedruckten Messfeldern wiederholt Volltondichten und/oder Rasterpunktgrößen ermittelt und beim Herausfallen derselben aus ihnen zugeordneten Toleranzbereichen durch Betätigung der Stellglieder korrigierend in den Druckvorgang eingegriffen wird, wobei zur Aufrechterhaltung des Farbgleichgewichts während des Druckvorgangs auch wiederholt ausgewählte Beziehungen von Volltondichten und/oder Rasterpunktgrößen verschiedener Druckfarben zueinander ermittelt und auch beim Herausfallen der ausgewählten Beziehungen aus ihnen zugeordneten Toleranzbereichen durch Betätigung der Steuerorgane korrigierend in den Druckvorgang eingegriffen wird.

Durch die DD 80 046 A1 ist ein Verfahren zur Erkennung von Makulaturexemplaren beim Rollendruck bekannt, wobei eine oder mehrere fotoelektrische Abtaster oder Beleuchtungs- und Messstrahlen das Remissionsvermögen einer nichtbedruckten Fläche auf dem Papier von einer oder beiden Seiten messen, wobei dieses Verfahren die Möglichkeit bietet, das Messsignal vor der Austastung zur Erkennung unbedruckter Exemplare oder solcher mit zu geringer Farbführung heranzuziehen.

Der Erfindung liegt die Aufgabe zugrunde, ein Verfahren zur Farbregelung einer Druckmaschine zu schaffen, wobei eine in einem laufenden Druckprozess innerhalb einer Druckmaschine automatisch durchgeführte Farbregelung nur in einem Betriebszustand der Druckmaschine ausgeführt wird, der für eine aktive automatische Farbregelung tatsächlich auch sinnvoll ist.

Die Aufgabe wird erfindungsgemäß durch die Merkmale des Anspruchs 1 gelöst.

Die mit der Erfindung erzielbaren Vorteile bestehen insbesondere darin, dass eine in einem laufenden Druckprozess innerhalb einer Druckmaschine automatisch, d. h. ohne Eingriff von Bedienpersonal durchgeführte Farbregelung nur in einem Betriebszustand der Druckmaschine ausgeführt wird, der für eine aktive automatische Farbregelung tatsächlich auch sinnvoll ist. Die gefundene Lösung definiert eine Bedingung, unter welcher die automatische Farbregelung ausgeführt wird. Denn nicht in jedem Betriebszustand der Druckmaschine ist eine aktive automatische Farbregelung sinnvoll, z. B. nicht in den ersten Momenten des Anfahrens der Druckmaschine, in welchem der Farbübertragungsvorgang erst aufgebaut wird. Diese Bedingung wird vorzugsweise vor dem Druckprozess festgelegt. Sie ist vorzugsweise frei parametrierbar und in einer das Farbwerk regelnden Regeleinrichtung gespeichert. Darüber hinaus wird z. B. eine Relation gebildet, anhand welcher die Plausibilität mindestens eines in der Druckmaschine erfassten Messwertes einer in einer ausgewählten Farbzone ermittelten Farbdichte einer Druckfarbe im Verhältnis zu dem jeweiligen Messwert einer in einer anderen Farbzone ermittelten Farbdichte derselben Druckfarbe geprüft wird, wobei diese Farbzonen vorzugsweise nebeneinander quer zur Transportrichtung des Bedruckstoffes angeordnet sind. Für die Farbregelung werden dann vorzugsweise ausschließlich solche Messwerte verwendet, die im Kontext weiterer für dieselbe Druckfarbe ermittelter Messwerte plausibel sind, was dazu beiträgt, dass kurzzeitige singuläre Störungen das Regelverhalten der die Farbregelung ausführenden Regeleinrichtung nicht unnötigerweise destabilisieren. Zumindest eine der vorgenannten, aus jeweils eine Farbdichte angebenden Messwerten gebildeten Relationen wird von der das Farbwerk z. B. elektronisch und/oder mittels eines Programms regelnden Regeleinrichtung während des laufenden Druckprozesses der Druckmaschine vorzugsweise auf eine Veränderung geprüft. Die im laufenden Druckprozess innerhalb der Druckmaschine vorzugsweise fortlaufend durchgeführte Überprüfung dieses Messwertes auf seine Plausibilität sowie die daran anschließende selektive Verwendung des betreffenden Messwertes für die Farbregelung tragen wesentlich zu einem stabilen Regelverhalten der das Farbwerk regelnden Regeleinrichtung bei, was eine Erzeugung von Druckprodukten von einer hohen Qualität mit hoher Wirtschaftlichkeit unterstützt und unnötige Unterbrechungen des Druckbetriebs vermeiden hilft.

Ein Ausführungsbeispiel der Erfindung ist in den Zeichnungen dargestellt und wird im Folgenden näher beschrieben.

Es zeigen:
- Fig. 1: eine vereinfachte Darstellung einer Offsetbogendruckmaschine;
- Fig. 2: einen Ausschnitt eines Druckbogens mit einem Messstreifen;
- Fig. 3: eine schematische Darstellung einer von einem Druckbogen remittiertes Licht erfassenden Erfassungseinrichtung mit einer zugehörigen Beleuchtungseinrichtung;
- Fig. 4: einen Druckbogen mit einem Messstreifen und mehreren Farbzonen.

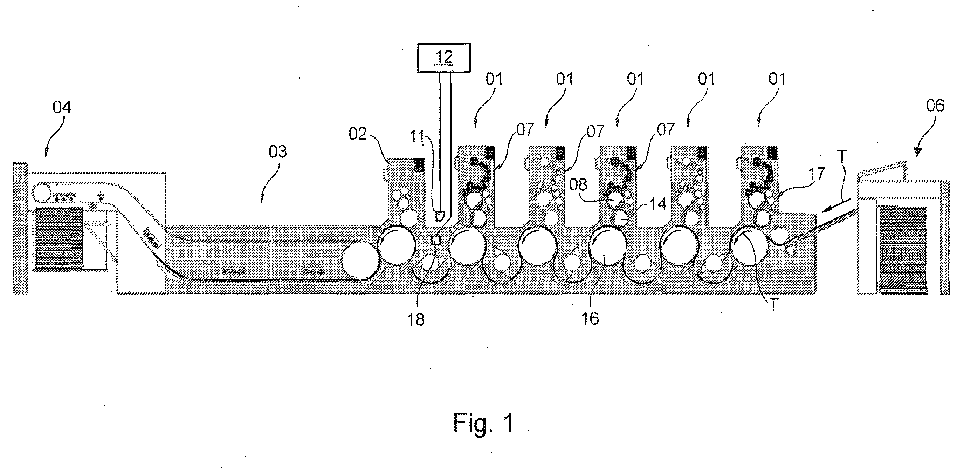

Die Fig. 1 zeigt eine beispielhaft als eine Bogendruckmaschine ausgebildete Druckmaschine. Alternativ kann die Druckmaschine jedoch auch als eine Rollendruckmaschine ausgebildet sein. Die Druckmaschine ist insbesondere als eine Offsetdruckmaschine ausgebildet, wobei die Druckmaschine unter Anwendung eines konventionellen oder eines wasserlosen, d. h. ohne Zugabe eines Feuchtmittels druckenden Offsetdruckverfahrens drucken kann.

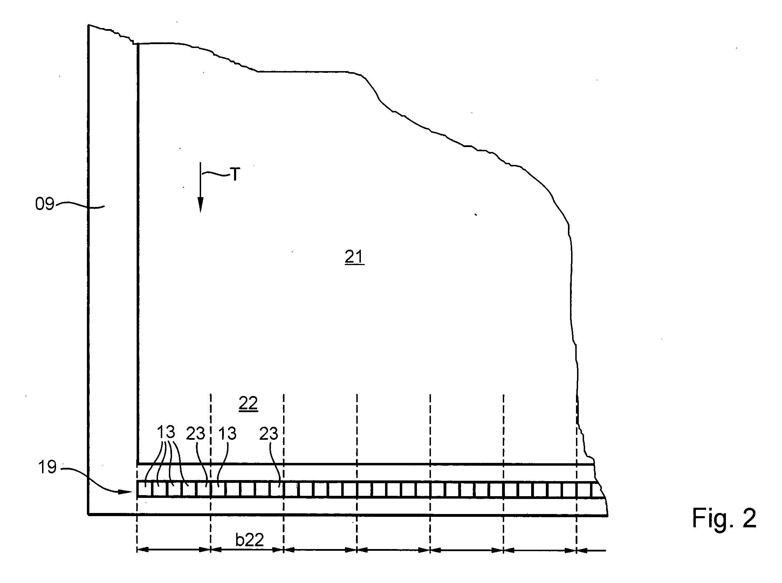

Die Druckmaschine weist vorzugsweise mehrere, denselben Bedruckstoff 09 (Fig. 2) jeweils mit einer Druckfarbe z. B. in einem der Farbtöne Schwarz, Cyan, Magenta oder Gelb bedruckende Druckwerke 01 auf. In dem Beispiel der Fig. 1 sind in einer durch Pfeile angedeuteten Transportrichtung T des Bedruckstoffes 09 in Reihenbauweise einander nachfolgend fünf Druckwerke 01 vorgesehen, wobei jedes dieser Druckwerke 01 z. B. mindestens einen jeweils mit einem Übertragungszylinder 14 zusammenwirkenden Formzylinder 08 aufweist. Jedem Formzylinder 08 ist jeweils ein Druckfarbe auf den Formzylinder 08 auftragendes Farbwerk 07 zugeordnet. Den Druckwerken 01 folgen in Transportrichtung T des Bedruckstoffes 09 z. B. eine Lackiereinrichtung in Form eines Lackturmes 02 sowie eine Auslageverlängerung 03 und ein Ausleger 04. Am gegenüberliegenden Ende der Bogendruckmaschine ist ein Bogenanleger 06 angeordnet. Die Zahl der einander nachfolgenden Druckwerke 01 kann je nach Bedarf niedriger oder höher gewählt sein als in dem in der Fig. 1 dargestellten Beispiel. Eine Erweiterung bis auf zehn Druckwerke 01 ist durchaus möglich. Zumindest eines der mehreren Druckwerke 01 kann als ein Imprinter ausgebildet sein, sodass an der Druckmaschine ein fliegender Plattenwechsel, d. h. ein Wechsel von Druckformen an dem jeweiligen Formzylinder 08 des betreffenden Druckwerks 01 bei laufender Produktion der Druckmaschine aufgrund einer Trennung des betreffenden Formzylinders 08 aus dem laufenden Druckvorgang möglich ist. Auch kann die Bogendruckmaschine für einen Schön- und Widerdruck vorgesehen sein, d. h. für einen beidseitigen Druck auf dem die Bogendruckmaschine durchlaufenden Bedruckstoff 09, und zur Realisierung dieser Funktion z. B. eine Wendeeinrichtung aufweisen. Die Imprinterfunktion kann für den Schön- und Widerdruck, d. h. beidseitig des Bedruckstoffes 09 vorgesehen sein. Imprinterfähige Druckeinheiten 01 können auch für den Druck von Schmuckfarben oder Sonderfarben verwendet werden. Außer einer Anordnung der Druckwerke 01 in Reihenbauweise kann auch eine Anordnung in Form eines Turms mit einer im Wesentlichen vertikalen Führung des Bedruckstoffes 09 vorgesehen sein. Häufig werden in Transportrichtung T des Bedruckstoffes 09 vor einem Auftragen der helleren Druckfarben, wie z. B. Gelb oder Magenta, zuerst die dunkleren Druckfarben verdruckt, wie z. B. Schwarz oder Cyan.

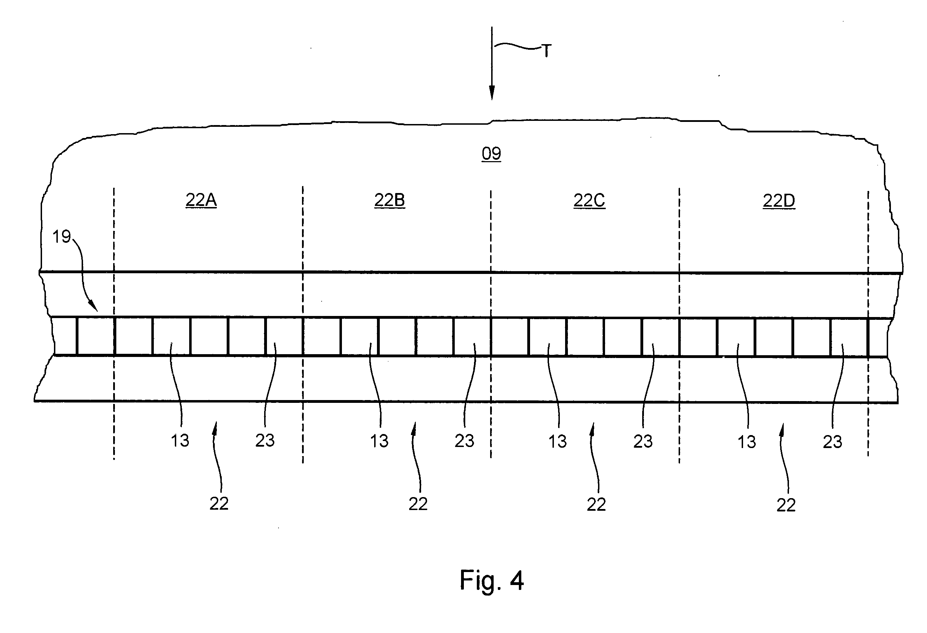

Bei dem Bedruckstoff 09 handelt es sich je. nach verwendetem Typ von Druckmaschine um Material in Form von Druckbogen 09 oder um eine Materialbahn, die jeweils vorzugsweise aus einem aus aufgeschlossenen Pflanzenfasern hergestellten Werkstoff bestehen und je nach ihrer Anwendung und ihrem Flächengewicht der Produktsorte Papier (< 150 g/m²), Karton (150 bis 600 g/m²) oder Pappe (> 600 g/m²) zuzurechnen sind. Die Größe eines Druckbogens 09 kann längs zu seiner Transportrichtung T (Fig. 4) durch die Druckmaschine z. B. mehr als 1.000 mm und quer zu seiner Transportrichtung T z. B. mehr als 700 mm betragen. Auch eine Materialbahn kann längs zu ihrer Transportrichtung T durch die Druckmaschine eine Breite z. B. von mehr als 1.000 mm aufweisen. Im Rollendruck werden Breiten z. B. von bis zu 2.600 mm realisiert.

Zur Verbesserung der Bedruckbarkeit des Bedruckstoffes 09 kann insbesondere ein aus Papier bestehender Bedruckstoff 09 einseitig oder beidseitig auf seiner Oberfläche gestrichen sein, d. h. mit einer weißen, einschichtig oder mehrschichtig aufgetragenen Strichmenge aus Pigmenten, Bindemitteln und Zusatzstoffen, z. B. optischen Aufhellern, versehen sein, wodurch die Oberfläche des Bedruckstoffes 09 hinsichtlich ihrer Helligkeit, ihres Farbtons und/oder ihrer herstellungsbedingten Struktur oder Rauheit gezielt beeinflusst wird. Das Flächengewicht der Strichmenge liegt dabei z. B. im Bereich zwischen 5 und 20 g/m², vorzugsweise zwischen 5 g/m² und 10 g/m². Auch kann nach dem Streichen der Oberfläche des Bedruckstoffes 09 dessen Satinage, d. h. eine Glättung der Oberfläche des Bedruckstoffes 09 in einem Kalander, erfolgen, was sich wiederum auch auf die optischen Eigenschaften des Bedruckstoffes 09 und dessen Bedruckbarkeit auswirkt. Die Oberfläche des Bedruckstoffes 09 kann z. B. zur Verwendung als Banknotenpapier oder Dokumentenpapier auch eine eingeprägte oder aufgeprägte Struktur aufweisen, wobei diese Struktur flächig oder als ein Relief ausgebildet sein kann.

Bei einem Durchlauf des Bedruckstoffes 09 durch die Druckmaschine ist dessen Beeinflussung durch Feuchtigkeit aus ihn umgebender Luft, aus einer auf seiner Oberfläche aufgetragenen Druckfarbe oder aus einem dem Druckprozess zugeführten Feuchtmittel oder durch einen Angriff mechanischer Kräfte unvermeidbar. Je nach seiner Beschaffenheit wirken sich diese Einflüsse unterschiedlich auf eine Dehnung von dessen Oberfläche quer und/oder längs in dessen durch die Druckmaschine verlaufender Transportrichtung T aus, wobei je nach Ursache zwischen einer Feuchtdehnung und/oder einer mechanischen Dehnung zu unterscheiden ist. Diese sich am Bedruckstoff 09 zeigenden Wirkungen beeinflussen seine Verdruckbarkeit.

Am Druck sind zumeist mehrere Druckfarben beteiligt, die sich nach dem Übereinanderdruck mehrerer Farbauszüge in einem autotypischen Farbmischprozess zu einem mehrfarbigen Druckbild 21 (Fig. 2) ergänzen, wobei jeder Farbauszug jeweils nur eine der am Druck beteiligten Druckfarben auf den Bedruckstoff 09 druckt. Häufig verwendet man als Primärdruckfarben Druckfarben in den Farbtönen Magenta, Cyan und Gelb, aus denen eine Vielzahl weiterer Farbtöne gemischt werden. Um den technologischen Aufwand zur Erzeugung von Schwarz oder von einem Grauton als Mischung aus den drei zuvor genannten Buntfarben zu reduzieren und dadurch hochwertige Buntfarben einzusparen, wird zumeist zusätzlich Druckfarbe im Farbton Schwarz eingesetzt. Darüber hinaus können eine oder mehrere Sonderfarben verdruckt werden, um im Druck einen kundenspezifischen Farbton oder Effekt zu erzeugen. Dabei beeinflussen die farbmetrischen Eigenschaften der im Druck verwendeten Druckfarben in Verbindung mit der Beschaffenheit des Bedruckstoffes 09, auf den die Druckfarben in der Druckmaschine aufgetragen werden, den im Druck reproduzierbaren Farbumfang erheblich. Die farbmetrischen Eigenschaften der Druckfarben sind u. a. auch von der chemischen Zusammensetzung ihrer Farbpigmente abhängig. Zumeist vergleichsweise teure Farbpigmente können beispielsweise den mit dieser Druckfarbe reproduzierbaren Farbraum erweitern. Überdies ist vom verwendeten Bedruckstoff 09 z. B. der mit einer Druckfarbe wiedergebbare Farbkontrast abhängig. Bei gestrichenen Papieren ist im Übereinanderdruck der Primärdruckfarben für den Vollton eine optische Dichte von etwa zwei Dichteeinheiten (kurz: 2D) erreichbar, insbesondere für die Druckfarbe Schwarz.

Beim autotypischen Farbmischprozess wird das mehrfarbige Druckbild 21 durch jeweils Rasterpunkte aufweisende Farbauszüge drucktechnisch zusammengesetzt, wobei für alle am Druck beteiligten Druckfarben jeweils ein Farbauszug vorgesehen ist und die Rasterpunkte unterschiedlicher Farbauszüge auf dem Bedruckstoff 09 sowohl nebeneinander freistehend als auch übereinander aufgetragen werden. Die Qualität des Druckes wird von der Art und der Feinheit der Rasterung, d. h. der Formgebung und Anordnung der Rasterpunkte, beeinflusst. In einem Offsetdruckverfahren können Rasterpunkte typischerweise ab einer Größe von ca. 10 µm zuverlässig übertragen werden, wobei im Mehrfarbendruck Rasterweiten zwischen 50 und 80 Linien pro cm gebräuchlich sind. Feinraster zur Wiedergabe filigraner Strukturen weisen bis zu 150 Linien pro cm auf, denn je feiner die Rasterung ist, desto höher ist das Auflösungsvermögen des Druckes und damit die Reproduktionsfähigkeit feiner Strukturen. Um im Mehrfarbendruck Moire, d. h. eine Interferenzerscheinung, oder eine Rosettenbildung zu vermeiden, empfiehlt es sich, die Rasterung nichtperiodisch auszubilden. Durch eine Kombination einer periodischen und einer nichtperiodischen Rasterung lässt sich die Qualität des Druckes weiter steigern. Durch eine geeignete Rasterwinkelung von am Druck beteiligten Farbauszügen in Winkelabständen von z. B. jeweils 15° kann Moiré weitgehend vermieden werden.

Rasterpunkte können z. B. eine kreisförmige, quadratische oder elliptische Form aufweisen und in einer amplitudenmodulierten, frequenzmodulierten oder intensitätsmodulierten Rasterung angeordnet sein. Bei einer amplitudenmodulierten Rasterung weisen die einzelnen Rasterpunkte einen konstanten Mittelpunktsabstand auf und variieren in ihrer Flächenausdehnung, wohingegen bei einer frequenzmodulierten Rasterung die einzelnen Rasterpunkte eine konstante Flächenausdehnung mit variierenden Mittelpunktsabständen aufweisen. Bei einer intensitätsmodulierten Rasterung wird die Schichtdicke der auf dem Bedruckstoff 09 aufgetragenen Rasterpunkte variiert, wodurch die optische Dichte der Rasterpunkte verändert wird. Mischformen der Rasterung mit einer mehrdimensionalen Modulation sind möglich. Im Mehrfarbendruck nimmt die relative Positionierung der Rasterpunkte unterschiedlicher am Druck beteiligter Farbauszüge zueinander sowie der Grad der flächigen Verteilung der Rasterpunkte in jedem dieser Farbauszüge beim Übereinanderdruck der Rasterpunkte auf die Qualität des Druckes Einfluss. Beim Übereinanderdruck wird die relative Lage der Farbauszüge zueinander als Farbregister oder auch als Passer bezeichnet.

Die Beschaffenheit der im Druck verwendeten Druckfarben wirkt nachhaltig auf die Qualität des Druckes. Zur Beschaffenheit der Druckfarbe zählt auch ihr rheologisches Verhalten, d. h. ihre Fließfähigkeit und ihr Haftungsvermögen auf dem Bedruckstoff 09 sowie auf Rasterpunkten zumindest eines zuvor gedruckten Farbauszuges. Die Fließfähigkeit der Druckfarbe ist durch ihre Viskosität bestimmt. Je hochviskoser eine Druckfarbe ist, desto zäher ist sie, was zur Folge hat, dass sie schlechter verläuft und sich schwieriger zu einem homogenen Film verteilen lässt. Das Haftungsvermögen der Druckfarbe wird durch ihre Zügigkeit spezifiziert. Je höher die in Form eines Tackwertes angegebene Zügigkeit der Druckfarbe ist, desto schlechter ist sie spaltfähig, sodass es höherer Kräfte bedarf, um einen Film dieser Druckfarbe durch eine Anordnung von Rotationskörpern zu transportieren und auf den Bedruckstoff 09 zu übertragen, was in der Druckmaschine zufolge eines höheren Reibungswiderstandes zu einer Wärmeerzeugung führt.

Die Viskosität und Zügigkeit einer Druckfarbe sind temperaturabhängig. Auch eine Produktionsgeschwindigkeit der Druckmaschine, mit der der Bedruckstoff 09 durch die Druckmaschine transportiert wird und die z. B. bei einer Bogendruckmaschine 18.000 Bogen/h oder bei einer Rollendruckmaschine 16 m/s betragen kann, nimmt zumindest indirekt auf die Viskosität und Zügigkeit der Druckfarbe Einfluss. Damit beim Übereinanderdruck mehrerer Druckfarben eine nachfolgend gedruckte Druckfarbe auf einer zuvor gedruckten Druckfarbe haftet, muss die nachfolgende Druckfarbe einen geringeren Tackwert aufweisen ("Trapping").

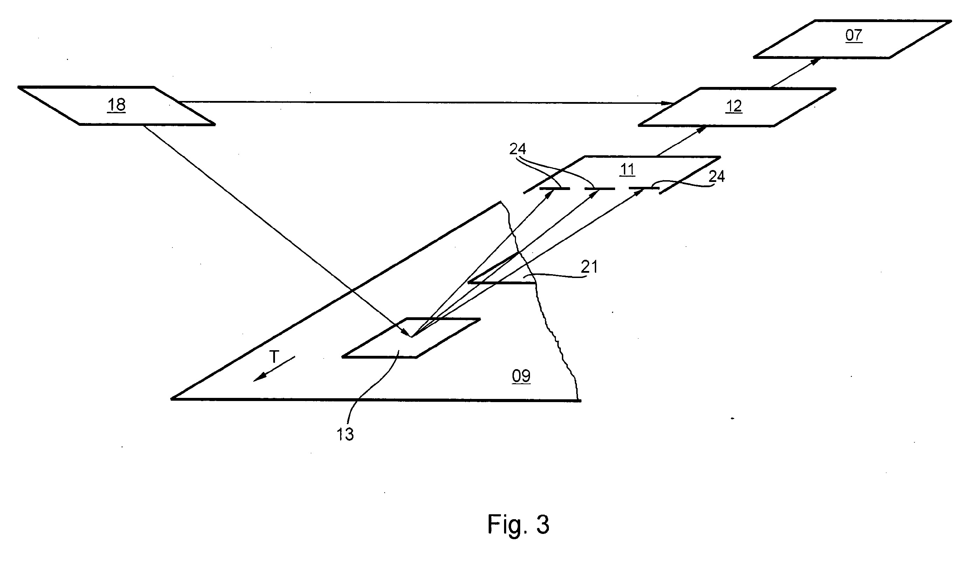

Die in der Fig. 1 gezeigte Druckmaschine weist in oder an mindestens einem ihrer Druckwerke 01 mindestens eine Erfassungseinrichtung 11 mit mindestens einem vorzugsweise optischen Sensor 24 auf (Fig. 3), wobei dieser Sensor 24 auf eine Oberfläche des in der Druckmaschine bedruckten Bedruckstoffes 09 gerichtet ist und mindestens einen mit der Qualität des Druckes korrelierenden Messwert erfasst. Sich aus diesem Messwert ergebende vorzugsweise digitale Daten werden von der optischen Erfassungseinrichtung 11 an eine Regeleinrichtung 12 gesendet, woraufhin die Regeleinrichtung 12 zumindest das mindestens eine Farbwerk 07 in Abhängigkeit einer Differenz zwischen einer als Sollwert vorgegebenen Qualität des Druckes und der als Istwert von der optischen Erfassungseinrichtung 11 erfassten Qualität des Druckes vorzugsweise nach dem Erreichen oder Überschreiten einer zulässigen Toleranzgrenze in einer die Differenz zwischen dem Sollwert und dem Istwert minimierenden Weise einstellt. Eine von der Regeleinrichtung 12 ausgeübte Regelung hinsichtlich der vom Farbwerk 07 auf den Bedruckstoff 09 aufzutragenden Druckfarbe ist somit unmittelbar von denjenigen Daten abhängig, die der Regeleinrichtung 12 von der Erfassungseinrichtung 11 zugeführt werden.

Jedes Farbwerk 07 weist eine Dosiereinrichtung zum Dosieren der Menge der auf den Bedruckstoff 09 zu übertragenden Druckfarbe auf. Diese Dosiereinrichtung kann in Axialrichtung des Formzylinders 08 nebeneinander mehrere, z. B. zwischen 30 und 60 oder auch mehr vorzugsweise jeweils gleich breite Zonen 22 - so genannte Farbzonen 22 - aufweisen (Fig. 2), wobei die Dosierung der auf den Bedruckstoff 09 zu übertragenen Druckfarbe von der Regeleinrichtung 12 in unterschiedlichen Zonen 22 unterschiedlich einstellbar und bei Bedarf nachführbar ist. Die Dosiereinrichtung kann z. B. steuerbare Zonenschrauben aufweisen, wobei in der im Mehrfarbendruck druckenden Druckmaschine insgesamt mehrere hundert jeweils einzeln steuerbare Zonenschrauben vorgesehen sein können. Die Dosiereinrichtung dosiert in Abhängigkeit einer von der Regeleinrichtung 12 gegebenen Vorgabe eine Menge der auf den Bedruckstoff 09 zu übertragenden Druckfarbe durch eine Einstellung ihrer Schichtdicke und/oder ihrer Auftragungsdauer. So kann die Dosiereinrichtung auch als ein mindestens eine Farbpumpe verwendendes Farbzufuhrsystem, z. B. als ein Pumpfarbwerk, ausgebildet sein, wobei Druckfarbe an einen Farbduktor des Farbwerks 07 herangeführt wird und am Farbduktor vorzugsweise zonenweise mittels individuell auf die verschiedenen Farbzonen 22 wirkender Stellmittel dosierbar ist, wobei die Stellmittel z. B. ein von mindestens einem elektrisch betätigbaren Stellantrieb antreibbares Farbdosiermittel, z. B. mindestens ein Farbmesser oder einen Farbschieber, aufweisen, wobei der Stellantrieb z. B. als ein von der Regeleinrichtung 12 stellbarer Stellmotor ausgebildet ist. Das Farbwerk 07 kann als ein Kurzfarbwerk oder als ein auf dem Farbtransportweg z. B. mehr als vier Walzen aufweisendes konventionelles Walzenfarbwerk ausgebildet sein.

In der Druckmaschine werden der Formzylinder 08 und der zugeordnete Übertragungszylinder 14 vorzugsweise unabhängig voneinander jeweils z. B. durch einen vorzugsweise lagegeregelten elektrischen Antrieb angetrieben. Die Druckmaschine ist demnach vorzugsweise wellenlos ausgebildet, wobei die Antriebe der Formzylinder 08 und/oder der Übertragungszylinder 14 von einem Antrieb eines zugehörigen Gegendruckzylinders 16 mechanisch entkoppelt sind. Es kann zwar vorgesehen sein, dass der Formzylinder 08 und der Übertragungszylinder 14 z. B. mit Zahnrädern mechanisch gekoppelt sind und einen gemeinsamen vorzugsweise lagegeregelten Antrieb aufweisen, dass aber dieser gemeinsame Antrieb auf jeden Fall von einem Antrieb des Gegendruckzylinders 16 mechanisch entkoppelt ist. Mit mindestens einem dieser Antriebe ist eine Phasenlage oder eine Winkellage zwischen dem Formzylinder 08 und/oder dem Übertragungszylinder 14 gegenüber dem Gegendruckzylinder 16 oder relativ zu einem anderen Formzylinder 08 der Druckmaschine einstellbar und vorzugsweise regelbar, wobei die Phasenlage oder Winkellage zur Einstellung eines Umfangsregisters nutzbar ist. Es kann aber auch bei formschlüssiger Kopplung des Formzylinders 08 an den Gegendruckzylinder 14 ein Stellantrieb zur Phasenverstellung vorgesehen sein. Das Umfangsregister beeinflusst die Lagegenauigkeit eines Farbauszugs relativ zu einer quer zur Transportrichtung T des Bedruckstoffes 09 gerichteten Bezugskante oder Bezugslinie des Bedruckstoffes 09. Der Bedruckstoff 09 wird zwischen dem Gegendruckzylinder 16 und einem mit dem Gegendruckzylinder 16 zusammenwirkenden Übertragungszylinder 14 hindurchgeführt. Des Weiteren weist jedes Druckwerk 01 der in der Fig. 1 beispielhaft dargestellten Druckmaschine jeweils ein mit dem Formzylinder 08 zusammenwirkendes Feuchtwerk 17 auf. Die von mindestens zwei Druckwerken 01 dieser Druckmaschine auf denselben Bedruckstoff 09 gedruckten Druckfarben weisen vorzugsweise sich voneinander unterscheidende Farbtöne auf.

Die zur Erfassung der Qualität des Druckes vorgesehene optische Erfassungseinrichtung 11 ist vorzugsweise als ein Inspektionssystem ausgebildet, insbesondere als ein den Bedruckstoff 09 während seines Transports durch die Druckmaschine inspizierendes Inline-Inspektionssystem. Ein Inspektionssystem erweitert die Funktionalität einer optischen Erfassungseinrichtung 11 dahingehend, dass alternativ oder insbesondere zusätzlich zur Detektion der z. B. densitometrisch ermittelbaren optischen Dichte einer auf dem Bedruckstoff 09 aufgetragenen Druckfarbe und/oder des farbmetrisch, insbesondere spektralfotometrisch ermittelbaren Farbtons und/oder des von Farbauszügen zueinander eingenommenen Farbregisters oder des Umfangsregisters und/oder des Seitenregisters eines Farbauszuges auch noch eventuelle Störungen im Druck, die z. B. durch den Transport des Bedruckstoffes 09 oder den Druckprozess verursacht sind, erkannt und geeignete Maßnahmen zur Beseitigung der Störung oder zur Ausschleusung des fehlerhaften Druckerzeugnisses ergriffen werden können. Von einem Inspektionssystem erkannte Störungen sind z. B. Kratzer, Knicke, Papier- oder Schmutzpartikel, Farbablagerungen oder Butzen.

Die optische Erfassungseinrichtung 11 erfasst vorzugsweise berührungslos in ihrer Grundfunktion eine Annahme von mindestens einer am Druck beteiligten Druckfarbe auf dem in der Druckmaschine bedruckten Bedruckstoff 09. Wenn mindestens eine im Druck verwendete Druckfarbe auf dem in der Druckmaschine bedruckten Bedruckstoff 09 am Erfassungsort der optischen Erfassungseinrichtung 11 vorhanden ist, erkennt die optische Erfassungseinrichtung 11 das Vorhandensein der Druckfarbe an mindestens einer Beschaffenheit dieser Druckfarbe.

Die Beschaffenheit der Druckfarbe kann ihr farbmetrischer Farbton, eine optische Dichte oder eine Schichtdicke, eine Form, eine Position, eine Winkelung oder eine flächige Verteilung ihrer auf dem Bedruckstoff 09 aufgetragenen Rasterpunkte sein. Die optische Erfassungseinrichtung 11 kann auch z. B. eine Lage von mindestens einem Rasterpunkt einer am Druck beteiligten Druckfarbe relativ zu einer Lage von mindestens einem Rasterpunkt mindestens einer anderen am Druck beteiligten Druckfarbe oder eine Lage von mindestens einem Rasterpunkt einer am Druck beteiligten Druckfarbe in einem auf dem Bedruckstoff 09 gedruckten Druckbild 21 erfassen, wobei die zuerst genannte Erfassungsoption eine Relativmessung und die zweite Erfassungsoption eine Absolutmessung, d. h. eine Bestimmung von Koordinaten des Rasterpunktes mit Bezug auf das zu druckende Druckbild 21, ist.

Insbesondere wenn die Druckmaschine den Bedruckstoff 09 beidseitig bedruckt, d. h. als Bogendruckmaschine im Schön- und Widerdruck arbeitet, kann die optische Erfassungseinrichtung 11 auf gegenüberliegenden Seiten desselben Bedruckstoffes 09 gedruckte Druckbilder 21 und deren relative Lage zueinander erfassen, d. h. ein so genanntes Wenderegister. Die jeweiligen auf einer der beiden Seiten des Bedruckstoffs 09 gedruckten Druckbilder 21 bestehen vorzugsweise jeweils aus mehreren Farbauszügen.

Die optische Erfassungseinrichtung 11 erfasst z. B. auch eine Beschaffenheit des in der Druckmaschine bedruckten Bedruckstoffes 09. Die Beschaffenheit des Bedruckstoffes 09 ist insbesondere eine dessen Bedruckbarkeit oder dessen Verdruckbarkeit betreffende Eigenschaft. So kann die Beschaffenheit des Bedruckstoffes 09 eine Feuchtdehnung und/oder eine mechanische Dehnung von dessen Oberfläche quer und/oder längs in dessen durch die Druckmaschine verlaufender Transportrichtung T sein. Die Beschaffenheit des Bedruckstoffes 09 kann auch eine auf dessen Oberfläche aufgetragene Strichmenge sein, insbesondere eine auf die Oberfläche des Bedruckstoffes 09 aufgetragene Strichmenge mit einem Strichgewicht von mehr als 5 g/m². Die Beschaffenheit des Bedruckstoffes 09 kann insbesondere auch einen Weißgrad von dessen Oberfläche betreffen.

Wie am Beispiel eines in der Fig. 2 ausschnittsweise dargestellten Druckbogens 09 gezeigt, erfasst die optische Erfassungseinrichtung 11 mindestens ein Messfeld 13, wobei das betreffende Messfeld 13 jeweils einem bestimmten der am Druckprozess beteiligten Farbauszüge zugeordnet ist. Das Messfeld 13 enthält Rasterpunkte mindestens einer Druckfarbe und ist z. B. als ein dem betreffenden Farbauszug zugeordnetes Volltonfeld ausgebildet. Das Messfeld 13 kann Bestandteil eines vorzugsweise außerhalb eines Satzspiegels des auf den Bedruckstoff 09 aufgedruckten Druckbildes 21 angeordneten Messstreifens 19 sein, wobei der sich z. B. in Axialrichtung des Formzylinders 08 zeilenförmig erstreckende Messstreifen 19 z. B. mehrere vorzugsweise jeweils gleiche Gruppen von jeweils z. B. fünf aneinander gereihten Feldern aufweist, wobei in jeder Gruppe jeweils ein z. B. als Volltonfeld ausgebildetes Messfeld 13 für die Druckfarben Schwarz, Cyan, Magenta und Gelb sowie ein unbedrucktes Weißfeld 23 vorgesehen ist. Jedes vorzugsweise quadratisch ausgebildete Messfeld 13 sowie das Weißfeld 23 haben jeweils z. B. das Format von 6x6 mm. Eine Gruppe bestehend aus vier nebeneinander angeordneten Messfeldern 13 sowie dem Weißfeld 23 erstreckt sich damit in Axialrichtung des Formzylinders 08 z. B. über 30 mm, wobei diese Erstreckung z. B. einer Breite b22 einer der Farbzonen 22 der Dosiereinrichtung des Farbwerks 07 entspricht. In jeder Farbzone 22 der Dosiereinrichtung des Farbwerks 07 ist z. B. die vorgenannte Gruppe bestehend aus vier nebeneinander angeordneten Messfeldern 13 sowie dem Weißfeld 23 angeordnet.

Die Erfassungseinrichtung 11 kann insbesondere durch den Einsatz einer optischen Einrichtung, z. B. eines Objektives, derart ausgebildet sein, dass sie zumindest eine quer zur Transportrichtung T verlaufende Breite eines Farbauszugs vollständig erfasst, vorzugsweise sogar eine quer zur Transportrichtung T verlaufende Breite des Bedruckstoffes 09. Die Erfassungseinrichtung 11 ist in der Druckmaschine vorzugsweise hinter dem in Transportrichtung T des Bedruckstoffes 09 letzten Druckwerk 01 angeordnet. In einer im Schön- und Widerdruck arbeitenden Bogendruckmaschine ist die Erfassungseinrichtung 11 z. B. vor einer Wendeeinrichtung des Bedruckstoffes 09 angeordnet. Die Erfassungseinrichtung 11 stellt an ihrem Ausgang entsprechend der Detektion ihres Sensors 24 vorzugsweise digitale Daten, insbesondere Bilddaten, bereit, die von der mit der Erfassungseinrichtung 11 verbundenen Regeleinrichtung 12 empfangen und ausgewertet werden.

Der Sensor 24 der Erfassungseinrichtung 11 ist vorzugsweise als ein Bildsensor 24 ausgebildet. Die Erfassungseinrichtung 11 kann mehrere Sensoren 24, auch mehrere Bildsensoren 24, aufweisen. Der Sensor 24 ist z. B. als eine Fotodiode ausgebildet, der Bildsensor 24 z. B. als ein CCD-Chip oder als ein CMOS-Chip. Der Sensor 24 sensiert vorzugsweise mehrere Farbtöne, insbesondere gleichzeitig. Die Erfassungseinrichtung 11 weist als Sensor 24 z. B. eine Zeilenkamera oder eine Flächenkamera auf.

In einer Wirkverbindung mit der Erfassungseinrichtung 11 ist vorzugsweise eine gleichsam mit der Regeleinrichtung 12 verbundene Beleuchtungseinrichtung 18 vorgesehen. Die Beleuchtungseinrichtung 18 kann ihr Licht permanent oder gepulst aussenden und z. B. als eine Kaltlichtquelle ausgebildet sein, d. h. als eine Lichtquelle mit einem nur sehr geringen oder praktisch nicht vorhandenem Infrarotanteil in ihrem Licht. Als Leuchtmittel werden in der Beleuchtungseinrichtung 18 z. B. mehrere Leuchtdioden oder Laserdioden zum Einsatz gebracht. Es ist vorteilhaft, in der Beleuchtungseinrichtung 18 insbesondere für ihr Leuchtmittel eine Kühleinrichtung vorzusehen. Die Kühleinrichtung kann die Kühlung der Leuchtmittel mit einem gasförmigen oder flüssigen Kühlmittel durchführen. Die Beleuchtungseinrichtung 18 kann für eine leichtere Adaption an eine quer zur Transportrichtung T des Bedruckstoffes 09 gerichtete, zu erfassende Breite des Messfeldes 13, des Farbauszuges oder des Bedruckstoffes 09 aus mehreren aneinander reihbaren Modulen bestehen.

Die Beleuchtungseinrichtung 18 ist vorzugsweise nah am Druckfarbe auf den Bedruckstoff übertragenden Übertragungszylinder 14 oder nah an dem Gegendruckzylinder 16 angeordnet. Bei einer Bogendruckmaschine ist die Beleuchtungseinrichtung 18 z. B. unter einem Fußtritt hinter dem letzten Druckwerk 01 der Druckmaschine angeordnet. Die Beleuchtungseinrichtung 18 weist zur Oberfläche des bedruckten Bedruckstoffes 09 einen Abstand z. B. im Bereich zwischen 30 mm und 200 mm auf, vorzugsweise zwischen 80 mm und 140 mm, wohingegen der Sensor 24 der Erfassungseinrichtung 11 zum Bedruckstoff 09 einen sich im Bereich zwischen 10 mm und 1.000 mm, vorzugsweise zwischen 50 mm und 400 mm bemessenen Abstand aufweist. Der Abstand der Beleuchtungseinrichtung 18 zur Oberfläche des bedruckten Bedruckstoffes 09 ist derart gewählt, dass einerseits eine gleichmäßige, intensive Ausleuchtung der Oberfläche des Bedruckstoffes 09 erfolgt, andererseits aber eine Verschmutzung der Beleuchtungseinrichtung 18 durch beim Transport des Bedruckstoffes 09 aufgewirbelte Schmutzpartikel oder einen Farbsprühnebel weitgehend vermieden wird.

Da die von der Regeleinrichtung 12 ausgeübte Regelung hinsichtlich der vom Farbwerk 07 auf den Bedruckstoff 09 aufzutragenden Druckfarbe von denjenigen Daten abhängig ist, die der Regeleinrichtung 12 von der Erfassungseinrichtung 11 zugeführt werden, müssen die von der Erfassungseinrichtung 11 erfassten Messwerte unverfälscht und zuverlässig sein, denn unerkannte verfälschte Messwerte führen ansonsten unwillkürlich zu einem unerwünschten Regelverhalten der Regeleinrichtung 12, welches für die im Produktionsprozess angestrebte Druckqualität abträglich ist. Daher wird zur verbesserten Stabilität der automatisch ausgeführten Farbregelung vorgeschlagen, bei einer Inline-Farbregelung, bei der mindestens ein Farbwerk 07 während eines laufenden Produktionsprozesses der Druckmaschine in seiner jeweiligen Einstellung seiner Dosiereinrichtung eingestellt und bedarfsweise nachgeführt wird, die von der Erfassungseinrichtung 11 erfassten Messwerte vorzugsweise fortlaufend auf ihre Plausibilität zu prüfen und nur plausibel erscheinende Messwerte für die von der Regeleinrichtung 12 ausgeübte Regelung des mindestens einen Farbwerks 07 zu verwenden. Die von der Erfassungseinrichtung 11 erfassten Messwerte können z. B. durch Schmutzpartikel, durch ein Tonen oder ein Schmieren einer Druckfarbe oder einen anderen während des laufenden Produktionsprozesses eintretenden Störeinfluss verfälscht sein. Kurzzeitige Störeffekte, die lediglich als singuläre, d. h. vereinzelte Ausreißer in den von der Erfassungseinrichtung 11 erfassten Messwerten zu betrachten sind, sollen die Farbregelung möglichst nicht destabilisieren. Andererseits muss die Farbregelung sensibel genug sein, um einen sich allmählich verschlechternden Farbauftrag eindeutig zu erkennen und durch eine entsprechende Einstellung der Dosiereinrichtung des Farbwerks 07 aktiv dem Störeinfluss wirksam gegenzusteuern.

Dazu trägt auch ein Verfahren zur Verwendung in einer Druckmaschine mit mindestens einem Farbwerk 07 bei, bei dem mindestens eine Einstellung des betreffenden Farbwerks 07 in einem laufenden eine Oberfläche eines Bedruckstoffs 09 bedruckenden Druckprozess der Druckmaschine anhand mindestens eines in diesem Druckprozess in der Druckmaschine erfassten Messwertes von einer Regeleinrichtung 12 änderbar ist, bei dem die Regeleinrichtung 12 den erfassten Messwert vor einer Veränderung der Einstellung des betreffenden Farbwerks 07 z. B. dadurch auf Plausibilität prüft, indem die Regeleinrichtung 12 z. B. ein Remissionsverhalten der Oberfläche des unbedruckten Bedruckstoffs 09 und/oder eine Relation einer an einer Messstelle, z. B. in einem Messfeld 13 ermittelten primären Farbdichte zu mindestens einer an derselben Messstelle, d. h. in demselben Messfeld 13 insbesondere gleichzeitig ermittelten sekundären Farbdichte und/oder eine in einer Farbzone 22 des betreffenden Farbwerks 07 ermittelte Farbdichte auf ihre Relation zu in mindestens einer benachbarten Farbzone 22 desselben Farbwerks 07 ermittelten Farbdichte prüft. Vorzugsweise werden mindestens zwei der die Plausibilität des erfassten Messwertes betreffenden Prüfungen von der Regeleinrichtung 12 gleichzeitig durchgeführt. Die Regeleinrichtung 12 setzt eine anstehende Veränderung der Einstellung des betreffenden Farbwerks 07 insbesondere dann aus, wenn wenigstens eine der Prüfungen hinsichtlich der Plausibilität des erfassten Messwertes zu einem negativen Ergebnis führt, d. h. das der betreffende erfasste Messwert von der Regeleinrichtung 12 als nicht plausibel zu verwerfen und für die Farbregelung nicht zu verwenden ist. In diesem Fall wird von der Regeleinrichtung 12 z. B. eine akustische und/oder eine optische Warnmeldung an einen zu der Druckmaschine gehörenden Leitstand abgesetzt. Dabei ist es unerheblich, ob der auf seine Plausibilität zu prüfende Messwert densitometrisch oder farbmetrisch erfasst wird.

Wie zuvor beschrieben, wird der auf seine Plausibilität zu prüfende Messwert z. B. mit einer Kamera, insbesondere einer Zeilenkamera erfasst. In einer bevorzugten Ausführung ist mindestens eine der die Plausibilität des erfassten Messwertes betreffenden Prüfungen in ihren Prüfkriterien z. B. am zur Druckmaschine gehörenden Leitstand und/oder an einer anderen mit der Druckmaschine verbindbaren Bedieneinheit parametrierbar.

In einer weiteren Ausgestaltung der Farbregelung ist z. B. auch ein Verfahren zur Prüfung von mindestens einem in einer Druckmaschine ermittelten Messwert auf seine Plausibilität verwirklicht, bei dem der Messwert eine Farbdichte einer auf einem durch die Druckmaschine transportierten Bedruckstoff 09 aufgetragenen Druckfarbe angibt, wobei auf dem Bedruckstoff 09 mehrere voneinander verschiedene Druckfarben aufgetragen werden, wobei diese auf dem Bedruckstoff 09 aufgetragenen Druckfarben von einer mindestens einen Bildsensor 24 aufweisenden Erfassungseinrichtung 11 gleichzeitig erfasst werden, wobei die Erfassungseinrichtung 11 an ihrem Ausgang elektronische, insbesondere digitale Bilddaten bereitstellt, wobei diese Bilddaten von einer mit der Erfassungseinrichtung 11 verbundenen, z. B. elektronischen Regeleinrichtung 12 ausgewertet werden, wobei aus den der Regeleinrichtung 12 zugeführten Bilddaten der jeweilige Messwert der Farbdichte von mehreren der auf dem Bedruckstoff 09 aufgetragenen Druckfarben insbesondere programmtechnisch, d. h. durch Anwendung spezieller Filter- und/oder Berechnungsverfahren, ermittelt wird, wobei die Plausibilität des mindestens einen so ermittelten Messwertes der Farbdichte von mindestens einer der Druckfarben anhand seines qualitativen und/oder quantitativen Verhältnisses zu dem jeweiligen mindestens einen ebenso ermittelten Messwert der Farbdichte von mindestens einer der anderen Druckfarben geprüft wird.

Wie erwähnt, prüft die Regeleinrichtung 12 unter Verwendung der Erfassungseinrichtung 11 zusätzlich oder alternativ auch das Remissionsverhalten der Oberfläche des unbedruckten Bedruckstoffs 09 z. B. in Verbindung mit einem Verfahrens zur automatischen Farbregelung in einem laufenden Druckprozess innerhalb der Druckmaschine, wobei der Bedruckstoff 09 in dem mit der Druckmaschine ausgeführten Druckprozess fortlaufend bedruckt wird, wobei eine Messung eines Remissionsverhaltens einer mit der Druckmaschine auf dem Bedruckstoff 09 aufgetragenen Druckfarbe bewertet wird, wobei zumindest ein das Remissionsverhalten der Druckfarbe erfassender Messwert unter Bezugnahme auf das Remissionsverhalten der Oberfläche des unbedruckten Bedruckstoffs 09 ausgewertet und für die Farbregelung herangezogen wird, wobei das Remissionsverhalten der Oberfläche des unbedruckten Bedruckstoffs 09 unter der Voraussetzung unveränderter Materialeigenschaften des in dem betreffenden Druckprozess verwendeten Bedruckstoffes 09 auf seine Stabilität während des laufenden Druckprozesses der Druckmaschine geprüft wird, wobei in einer Regeleinrichtung 12 der Farbregelung als ein Referenzwert ein mit dem Remissionsverhalten der Oberfläche des unbedruckten Bedruckstoffs 09 korrespondierender Messwert gesetzt wird, wobei während des Druckprozesses der Druckmaschine das Remissionsverhalten der Oberfläche des unbedruckten Bedruckstoffs 09 fortlaufend gemessen wird, wobei die dabei erfassten Messwerte auf eine Abweichung von dem zuvor als Referenzwert gesetzten Messwert geprüft werden, wobei ein vom Referenzwert abweichender Messwert jeweils als fehlerhaft aufgetragene Druckfarbe gewertet wird. Dabei werden vom Referenzwert abweichende Messwerte insbesondere als ein Tonen oder als ein Schmieren gewertet. In einer bevorzugten Ausführung lassen vom Referenzwert abweichende Messwerte eine Anwendung eines in der Druckmaschine verwendeten Farbregelungsverfahrens aussetzen.

In der konkreten Ausführung wird das Remissionsverhalten mindestens eines z. B. zum Messstreifen 19 gehörenden unbedruckten Weißfeldes 23 ausgewertet und unter der Voraussetzung unveränderter Materialeigenschaften des in dem betreffenden Produktionsprozess der Druckmaschine verwendeten Bedruckstoffes 09 auf seine Stabilität während dieses laufenden Produktionsprozesses geprüft. Denn im Fall eines vom Remissionsverhalten des Weißfeldes 23 abgeleiteten, aber instabilen Referenzwertes würden auch auf diesen Referenzwert bezogene aus anderen Messfeldern 13 stammende Messwerte zu einem verfälschten Ergebnis führen.

Dabei erfolgt die Messung des Remissionsverhaltens der Oberfläche des bedruckten und/oder unbedruckten Bedruckstoffs 09 jeweils z. B. densitometrisch oder farbmetrisch. Bei der Verwendung dieses Prüfungsverfahrens wird der Bedruckstoff 09 in einem mit der Druckmaschine ausgeführten Druckprozess vorzugsweise fortlaufend bedruckt. Vorzugsweise wird während des laufenden Druckprozesses der Druckmaschine das Remissionsverhalten der Oberfläche des unbedruckten Bedruckstoffs 09 an mehreren voneinander verschiedenen Messstellen der Oberfläche dieses Bedruckstoffs 09 fortlaufend gemessen. So könnte das Remissionsverhalten der Oberfläche des unbedruckten Bedruckstoffs 09 auch in einem von der Druckmaschine während ihres Druckprozesses auf dem Bedruckstoff 09 erstellten Druckbild 21 gemessen werden. Alternativ dazu wird das Remissionsverhalten der Oberfläche des unbedruckten Bedruckstoffs 09 außerhalb eines von der Druckmaschine während ihres Druckprozesses auf dem Bedruckstoff 09 erstellten Druckbildes gemessen. Als Bedruckstoff 09 wird z. B. eine Sequenz von Druckbogen 09 bedruckt. Das Remissionsverhalten der Oberfläche des unbedruckten Bedruckstoffs 09 wird in mindestens einem Messfeld 13 eines von der Druckmaschine während ihres Druckprozesses auf dem Bedruckstoff 09 erstellten Farbmessstreifens 19, vorzugsweise in mehreren von dessen Messfeldern 13 gemessen. Dabei wird das Remissionsverhalten der Oberfläche des unbedruckten Bedruckstoffs 09 in einer die Druckbogen 09 durch die Druckmaschine transportierenden Transportrichtung T z. B. direkt hinter einem Bogengreifer gemessen. Vom Referenzwert abweichende Messwerte werden als ein Tonen oder als ein Schmieren gewertet. In der Folge lassen vom Referenzwert abweichende Messwerte - ausgelöst z. B. durch ein von der Regeleinrichtung 12 abgesetztes Signal - eine Anwendung des in der Druckmaschine verwendeten Farbregelungsverfahrens aussetzen. Auch hier lassen vom Referenzwert abweichende Messwerte an der Druckmaschine und/oder an einem zu dieser Druckmaschine gehörenden Leitstand z. B. eine akustische und/oder eine optische Warnmeldung ergehen. Wie beschrieben wird zumindest das Remissionsverhalten der Oberfläche des unbedruckten Bedruckstoffs 09 z. B. mit einer Zeilenkamera erfasst.

Des Weiteren kann bei einem Verfahren, bei dem auf dem Bedruckstoff 09 mehrere voneinander verschiedene Druckfarben aufgetragen werden, wobei an einer selben Messstelle auf dem Bedruckstoff 09 die jeweilige Farbdichte von mehreren dieser Druckfarben ermittelt wird, mindestens ein in einem laufenden Druckprozess der Druckmaschine z. B. von der Erfassungseinrichtung 11 erfasster, eine Farbdichte von einer der auf dem durch die Druckmaschine transportierten Bedruckstoff 09 aufgetragenen Druckfarben repräsentierender Messwert dadurch auf seine Plausibilität geprüft werden, dass ein qualitatives und/oder quantitatives Verhältnis dieses mindestens einen Messwertes von einer der an der betreffenden Messstelle ermittelten Farbdichten zu dem jeweiligen mindestens einen Messwert von mindestens einer der anderen dort gleichfalls ermittelten Farbdichten geprüft und überwacht wird. Dabei wird zumindest derjenige Messwert der betreffenden Farbdichte als nicht plausibel verworfen, der zu dem Messwert der mindestens einen anderen an der ausgewählten Messstelle ermittelten Farbdichte in einem von einem für die ausgewählte Messstelle vorgegebenen Referenzverhältnis abweichenden Verhältnis steht.

Wie die Fig. 3 in einem perspektivisch dargestellten Ausschnitt aus der Fig. 2 andeutet, sendet die in oder an der Druckmaschine angeordnete, mit der Erfassungseinrichtung 11 zusammenwirkende Beleuchtungseinrichtung 18 z. B. weißes Licht auf eine auf der Oberfläche des Bedruckstoffes 09 angeordnete mit mindestens einer der Druckfarben bedruckte Messstelle, welche z. B. durch eines der Messfelder 13 in dem Messstreifen 19 gegeben ist. Die Erfassungseinrichtung 11 erfasst mit ihrem mindestens einen Sensor 24 von dieser Messstelle remittiertes Licht. Vorzugsweise weist die Erfassungseinrichtung 11 mehrere, z. B. drei Sensoren 24 auf, wobei jeder dieser Sensoren 24 dem jeweiligen Remissionsverhalten von einer der in dem laufenden Druckprozess verdruckten Druckfarben zugeordnet ist. So ist z. B. für die Druckfarben Cyan, Magenta und Gelb jeweils ein eigener Sensor 24, zumindest aber ein von der jeweiligen Druckfarbe remittiertes Licht in einem schmalen Frequenzband filternder Filter 24 vorgesehen. Die Erfassungseinrichtung 11 stellt an ihrem Ausgang mindestens einen Messwert bereit, der die Farbdichte von einer der an der Messstelle erfassten Druckfarben angibt. Die jeweilige an derselben Messstelle vorhandene Farbdichte von den drei Druckfarben Cyan, Magenta und Gelb wird von der Erfassungseinrichtung 11 vorzugsweise gleichzeitig erfasst. Auch werden in einem laufenden Druckprozess der Druckmaschine der jeweiligen Druckfarbe zugeordnete Messwerte vorzugsweise fortlaufend erfasst.

In einem einer bestimmten Druckfarbe, z. B. Cyan zugeordneten als Volltonfeld ausgebildeten Messfeld 13 wird für diese Druckfarbe eine Farbdichte z. B. im Bereich zwischen 1,3D und 1,6D, vorzugsweise z. B. 1,5D erwartet. In diesem Messfeld 13 bildet Cyan eine primäre Farbdichte oder Hauptdichte. In demselben Messfeld 13 werden jedoch auch die jeweiligen Farbdichten der anderen an demselben Druckprozess beteiligten Druckfarben, z. B. Magenta und Gelb ermittelt, welche hinsichtlich des gewählten, der Druckfarbe Cyan zugeordneten Messfeldes 13 als sekundäre Farbdichten oder Nebendichten bezeichnet werden. Die Nebendichte Magenta soll in diesem Messfeld 13 gemäß einer zuvor getroffenen Festlegung nicht mehr als z. B. 60% der Hauptdichte betragen, was einem Wert der optischen Dichte z. B. zwischen 0,75D und 1,0D entspricht, wodurch in diesem Beispiel ein erstes Referenzverhältnis zwischen der Hauptdichte Cyan und der Nebendichte Magenta gebildet ist. Für die Nebendichte Gelb soll in diesem Beispiel gelten, dass ihr Messwert z. B. nicht mehr als 30% der Hauptdichte beträgt, was einem Wert der optischen Dichte z. B. zwischen 0,35D und 0,5D entspricht, wodurch in diesem Beispiel dann ein zweites Referenzverhältnis zwischen der Hauptdichte Cyan und der Nebendichte Gelb gebildet ist. Auch für die übrigen am Druckprozess beteiligten Hauptdichten können bezüglich ihrer jeweils vorzugsweise als Volltonfelder 13 ausgebildeten Messfelder 13 ähnliche, im Zahlenwert jedoch unterschiedliche Festlegungen getroffen werden. Im Ergebnis ergibt sich für alle am Druckprozess beteiligten Druckfarben z. B. eine vorzugsweise parametrierbare Einstellungsmatrix, welche z. B. an einem zur Druckmaschine gehörenden Leitstand und/oder an einer anderen mit der Druckmaschine verbindbaren Bedieneinheit eingebbar und/oder einstellbar ist, wobei die jeweiligen Werte der Nebendichten z. B. jeweils auf die jeweilige Hauptdichte bezogen dargestellt sind.

Nur wenn die in einem laufenden Druckprozess zu den jeweiligen Druckfarben ermittelten Messwerte die jeweils zuvor festgelegten Relationen zueinander, d. h. ihre betreffenden Referenzverhältnisse nicht überschreiten, dann soll der bezüglich eines bestimmten Messfeldes 13 als Hauptdichte ermittelte Messwert als plausibel und damit als weiter verwendbar gelten. Andernfalls wird ein zumindest eine der festgelegten Relationen nicht einhaltender Messwert einer Hauptdichte für eine Inline-Farbregelung nicht herangezogen, sondern von der Regeleinrichtung 12 verworfen werden, d. h. die Regeleinrichtung 12 nimmt anhand eines mindestens ein Referenzverhältnis nicht einhaltendes Messwertes keine Änderung in der Einstellung der Dosiereinrichtung des Farbwerks 07 vor. Vielmehr wird ein Bediener der Druckmaschine beim Vorliegen eines nicht plausiblen Messwertes durch eine optische und/oder akustische Meldung auf diesen unerwünschten Betriebszustand der Druckmaschine hingewiesen. Farbzonen 22 (Fig. 2 und 4) mit unzulässig hohen Nebendichten können von der Regeleinrichtung 12 für eine spätere Auswertung und Ermittlung der Störungsursache registriert werden.

Es ist vorteilhaft, dieses Verfahren zur Prüfung eines einer Hauptdichte zugeordneten Messwertes auf seine Plausibilität nach einem Anfahren der Druckmaschine erst dann durchzuführen, wenn der Messwert z. B. 80% seines erwarteten, voreingestellten oder maximalen Wertes erreicht hat, und sich die Druckmaschine somit nicht mehr in ihrem Andruck, sondern in ihrem Fortdruck befindet. Das für die ausgewählte Messstelle vorgegebene Referenzverhältnis ist vorzugsweise einstellbar. Dieses mindestens eine Relation zwischen einer Hauptdichte und mindestens einer Nebendichte auswertende Verfahren lässt erkennen, inwieweit eine am Druckprozess beteiligte Druckfarbe z. B. durch Tonen, Schmieren, Farbrückspaltung im Farbwerk 07 oder eine andere Verschmutzung in ihrer Brauchbarkeit beeinträchtigt ist. Die Prüfung einer ermittelten Farbdichte auf ihre Plausibilität wird in dem in der Druckmaschine angewendeten Farbregelungsverfahren automatisiert, d. h. ohne Zutun durch einen Bediener der Druckmaschine durchgeführt.

Eine weitere Plausibilitätsprüfung von Messwerten bezieht sich darauf, einen in einer z. B. von der Regeleinrichtung 12 ausgewählten Farbzone 22 des betreffenden Farbwerks 07 ermittelten Messwert einer Farbdichte auf eine Veränderung seiner Relation zu einem in mindestens einer benachbarten Farbzone 22 desselben Farbwerks 07 ermittelten Messwert der Farbdichte zu prüfen. In dem von der Regeleinrichtung 12 hinsichtlich der in den Farbzonen 22 bereitgestellten Farbmenge geregelten Farbwerk 07 wird von dessen Dosiereinrichtung eingetragene Druckfarbe i. d. R. in Axialrichtung des zugeordneten Formzylinders 08 durch eine Changierbewegung eines in dem Farbwerk 07 angeordneten Reibers seitlich verrieben und damit in ihrem Auftrag vergleichmäßigt, so dass sich für eine im Fortdruck der Druckmaschine zwischen benachbarten Farbzonen 22 einstellende Relation für die jeweiligen Farbdichten bei einer im laufenden Druckprozess unveränderten Einstellung der von der Dosiereinrichtung in die jeweilige Farbzone 22 eingetragenen Farbmenge nur eine sehr geringe Veränderung zu erwarten ist. Wenn sich die Relation der in benachbarten Farbzonen 22 in einem laufenden Druckprozess ermittelten Messwerte der Farbdichten in unzulässiger Weise verändert, z. B. bei einer ermittelten Differenz der optischen Dichte von 0,3D oder 0,4D zwischen benachbarten Farbzonen 22, ohne dass in diesem laufenden Druckprozess z. B. durch eine Regelanweisung der Regeleinrichtung 12 eine Einstellung der Dosiereinrichtung verändert wurde, lässt dies z. B. auf Butzen oder eine andere Verschmutzung schließen.

Fig. 4 zeigt einen Ausschnitt aus einem Druckbogen 09, auf welchem ein orthogonal zu seiner Transportrichtung T verlaufender Messstreifen 19 aufgebracht ist (Fig. 2). Längs zur Transportrichtung T des Druckbogens 09 verlaufen mehrere Farbzonen 22, z. B. die vier beispielhaft dargestellten Farbzonen 22A; 22B; 22C; 22D, wobei jede Farbzone 22A; 22B; 22C; 22D in dem Messstreifen 19 jeweils mehrere aneinander gereihte Messfelder 13 aufweist, wobei z. B. jedes der in einer der Farbzonen 22A; 22B; 22C; 22D angeordneten Messfelder 13 jeweils einer bestimmten am Druckprozess beteiligten Druckfarbe zugeordnet und z. B. als Volltonfeld 13 ausgebildet ist. Eines der in den Farbzonen 22A; 22B; 22C; 22D angeordneten Messfelder 13 kann auch jeweils als ein Weißfeld 23 ausgebildet sein (Fig. 2).

In dem in der Fig. 4 dargestellten Beispiel wird der z. B. in der Farbzone 22B in dem einer bestimmten Druckfarbe zugeordneten Messfeld 13 ermittelte Messwert für deren Farbdichte mit demjenigen Messwert in eine Relation gesetzt, der in dem betreffenden Messfeld 13 für die Farbdichte derselben Druckfarbe z. B. in der Farbzone 22A oder 22C ermittelt wird. Solange diese Relation insbesondere im Fortdruck der Druckmaschine bei einer im laufenden Druckprozess unveränderten Einstellung der von der Dosiereinrichtung in den betreffenden Farbzonen 22A; 22B; 22C eingetragenen Farbmenge innerhalb zulässiger Grenzen verbleibt, wird der in der ausgewählten Farbzone 22B für eine bestimmte Druckfarbe ermittelte Messwert für deren Farbdichte von der Regeleinrichtung 12 als plausibel gewertet, wohingegen im Fall einer durch Überschreitung oder Unterschreitung mindestens einer Grenze, d. h. eines zuvor festgelegten, z. B. in der Regeleinrichtung 12 gespeicherten Grenzwertes, unzulässig veränderten Relation der aktuell ermittelte Messwert nicht für die Farbregelung, insbesondere nicht für eine Inline-Farbregelung, herangezogen wird, wobei die Farbregelung eine Nachführung der Einstellung der Dosiereinrichtung des betreffenden Farbwerks 07 bewirkt. Im Fall einer unzulässig veränderten Relation wird der aktuell ermittelte Messwert von der Regeleinrichtung 12 als für die Farbregelung, insbesondere für die Inline-Farbregelung nicht brauchbar verworfen. Für die betreffende Farbzone 22B wird dann von der Regeleinrichtung 12 statt des aktuell ermittelten Messwertes ersatzweise ein Wert für die Farbdichte der betreffenden Druckfarbe anhand der aus den benachbarten Farbzonen 22A; 22C ermittelten Messwerte z. B. rechnerisch durch Interpolation oder Extrapolation gewonnen. Das Bilden von Relationen der Messwerte für Farbdichten zwischen verschiedenen Farbzonen 22; 22A; 22B; 22C; 22D ist nicht auf unmittelbar zueinander benachbarte Farbzonen 22A; 22B; 22C beschränkt, sondern kann auch auf voneinander weiter beabstandete, z. B. in demselben Messstreifen 19 weiter entfernt liegende Farbzonen 22D ausgedehnt werden. Durch diese Plausibilitätsprüfung wird erreicht, dass singuläre Störungen, d. h. so genannte Ausreißer in den Messwerten, denen keine anhaltenden Probleme in der Farbführung zugrunde liegen, die Farbregelung nicht aktivieren und damit nicht unnötigerweise das Regelverhalten der die Farbregelung ausführenden Regeleinrichtung 12 destabilisieren. Die Farbregelung erfolgt mithin nur dann, wenn tatsächlich Handlungsbedarf zur Korrektur der Farbführung besteht.

In einer bevorzugten Ausführung ist das Bilden von Relationen der Messwerte für Farbdichten zwischen verschiedenen Farbzonen 22; 22A; 22B; 22C; 22D an einem zur Druckmaschine gehörenden Leitstand und/oder an einer anderen mit der Druckmaschine verbindbaren Bedieneinheit parametrierbar, d. h. die zu bildende Relation der Messwerte für Farbdichten zwischen verschiedenen Farbzonen 22; 22A; 22B; 22C; 22D kann an einem zur Druckmaschine gehörenden Leitstand und/oder an einer anderen mit der Druckmaschine verbindbaren Bedieneinheit parametriert werden. Beispielsweise kann als Voraussetzung für das Bilden von Relationen der Messwerte für Farbdichten zwischen verschiedenen Farbzonen 22; 22A; 22B; 22C; 22D am Leitstand und/oder an der Bedieneinheit z. B. unter Verwendung einer an einer Anzeigeeinrichtung dargestellten Programmmaske eine Bedingung eingestellt werden, wobei die Bedingung fordert, dass die bezüglich eines bestimmten Farbwerks 07 vorhandenen Farbzonen 22; 22A; 22B; 22C; 22D mehrheitlich jeweils einen Messwert für die Farbdichte einer von diesem Farbwerk 07 bereitgestellten Druckfarbe liefern, welcher mindestens einen zuvor festgelegten Bruchteil des in der jeweiligen Farbzone 22; 22A; 22B; 22C; 22D voreingestellten, d. h. durch die z. B. von der Regeleinrichtung 12 vorgenommenen Einstellung vorgegebenen Sollwertes erreicht, z. B. mindestens 25%, insbesondere mindestens 50% jeweils dieses Sollwertes. Dies kann bedeuten, dass erst in über 50%, z. B. in mindestens 60%, 70% oder 80% der zu einem bestimmten Farbwerk 07 gehörenden Farbzonen 22; 22A; 22B; 22C; 22D die jeweilige Farbdichte jeweils vorzugsweise zumindest den halben Wert des für die jeweilige Farbzone 22; 22A; 22B; 22C; 22D voreingestellten Sollwertes erreichen muss, bevor die Regeleinrichtung 12 beginnt, einen in den jeweiligen Farbzonen 22; 22A; 22B; 22C; 22D für die Farbdichte ermittelten Messwert auf seine Plausibilität zu prüfen. Dadurch wird erreicht, dass die von der Regeleinrichtung 12 vorgenommene Farbregelung erst dann aktiv wird, nachdem sich der Druckprozess mit dem Farbauftrag in einem ausreichend stabilen Zustand befindet. Zumindest gewisse Teile einer Anfahrphase der Druckmaschine bleiben demnach vom Regelprozess unberücksichtigt. Nachdem aber z. B. gegen Ende der Anfahrphase der Druckmaschine die vorgenannte Bedingung in dem dann laufenden Druckprozess der Druckmaschine, insbesondere in deren sich der Anfahrphase anschließendem Fortdruck erfüllt ist, wird mit Bezug auf eine ausgewählte Farbzone 22; 22B deren Messwert für eine Farbdichte mit einem Messwert aus mindestens einer anderen zu demselben Farbwerk 07 gehörenden Farbzone 22; 22A; 22C; 22D zur Bildung einer Relation ins Verhältnis gesetzt, wobei der Messwert für die Farbdichte in der ausgewählten Farbzone 22; 22B dann als nicht plausibel verworfen wird, wenn die gebildete Relation um mehr als 50% von ihrem erwarteten voreingestellten Wert abweicht. Eine Farbzone 22; 22A; 22B; 22C; 22D mit einem als nicht plausibel verworfenen Messwert für die Farbdichte wird in der Regeleinrichtung 12 vorzugsweise registriert. Prinzipiell kann jede der zu einem bestimmten Farbwerk 07 gehörenden Farbzonen 22; 22A; 22B; 22C; 22D ausgewählt werden, wobei von der Regeleinrichtung 12 mehrere oder alle diese Farbzonen 22; 22A; 22B; 22C; 22D jeweils entweder einzeln nacheinander oder gleichzeitig in zueinander parallel ausgeführten Verfahren ausgewählt werden. Zur Prüfung der Plausibilität eines in einer ausgewählten Farbzone 22; 22B für eine Farbdichte ermittelten Messwertes werden Messwerte aus mindestens zwei weiteren, jeweils zu einer Seite der ausgewählten Farbzone 22; 22B angeordneten Farbzonen 22; 22A; 22C; 22D herangezogen. Vorzugsweise werden dafür beidseitig zu der ausgewählten Farbzone 22; 22B jeweils mindestens zwei weitere Farbzonen 22; 22A; 22C; 22D verwendet.

Alle zuvor beschriebenen Prüfungen von jeweils eine Farbdichte angebenden Messwerten oder die aus ihnen gebildeten Relationen können in einem Farbregler, d. h. in einer Regeleinrichtung 12 zur Farbregelung in einer Druckmaschine, jeweils einzeln oder in einer beliebigen Kombination angewendet werden. Die Farbregelung kann derart ausgestaltet sein, dass sie erst dann einsetzt, nachdem sich das Auftragen von Druckfarbe auf den Bedruckstoff 09 stabilisiert hat, d. h. ein bestimmter Grad von für die Farbdichte der jeweiligen Druckfarbe zuvor eingestellten Sollwerten erreicht ist, wobei sich diese anhand von Sollwerten durchgeführte Stabilitätsprüfung auf einzelne ausgewählte Farbzonen 22; 22A; 22B; 22C; 22D oder eine Gruppe von ausgewählten Farbzonen 22; 22A; 22B; 22C; 22D beziehen kann. Sodann werden für die Farbregelung nachfolgend nur solche jeweils mittels einer Erfassungseinrichtung 11 vorzugsweise aus digitalen Bilddaten gewonnenen Messwerte verwendet, die plausibel sind und z. B. keine durch nur kurzfristig wirkende Störungen verursachte Ausreißer bilden. Ausreißer werden z. B. von der Regeleinrichtung 12 durch andere, für dieselbe Druckfarbe vorzugsweise in benachbarten Farbzonen 22; 22A; 22C; 22D gewonnene Messwerte ersetzt. Die Plausibilität der Messwerte von verschiedenen Druckfarben kann auch durch ihre jeweilige Relation ermittelt werden, die sie insbesondere mit Bezug auf ein flächenmäßig eng begrenztes Messfeld 13 untereinander annehmen. In jedem Fall wird z. B. von der Regeleinrichtung 12 geprüft, ob die jeweiligen während einer laufenden Produktion der Druckmaschine inline erfassten Messwerte oder die aus ihnen gebildeten Relationen bestimmte, z. B. an einem Leitstand der Druckmaschine für eine bestimmte Produktion zuvor festgelegte Grenzwerte einhalten. Sofern die jeweiligen Messwerte oder die aus ihnen gebildeten Relationen diese Grenzwerte in unzulässiger Weise überschreiten oder unterschreiten, wird der betroffene, der Prüfung unterzogene Messwert oder die betreffende Relation als nicht plausibel verworfen und für die von der Regeleinrichtung 12 auszuführende Farbregelung nicht verwendet. Überdies kann ein Weißwert, der sich aus einer Prüfung des unbedruckten Bedruckstoffes 09 ergibt und auf den aus der Prüfung von Buntfarben gewonnene Messwerte als Nullmarke für deren jeweilige Farbdichte bezogen werden, in der laufenden Produktion stabil ist oder sich in unzulässiger Weise verändert. Insgesamt wird mit den beschriebenen Verfahren für eine in einer laufenden Druckmaschine durchgeführten Farbregelung ein sehr stabiles Regelverhalten erreicht, welches dazu beiträgt, in einem in einer Druckmaschine ausgeführten Druckprozess Druckprodukte von hoher Qualität zu erzeugen.

### Bezugszeichenliste

- 01: Druckwerk
- 02: Lackturm
- 03: Auslageverlängerung
- 04: Ausleger
- 05: -
- 06: Bogenanleger
- 07: Farbwerk
- 08: Formzylinder
- 09: Bedruckstoff; Druckbogen
- 10: -
- 11: Erfassungseinrichtung
- 12: Regeleinrichtung
- 13: Messfeld
- 14: Übertragungszylinder
- 15: -
- 16: Gegendruckzylinder
- 17: Feuchtwerk
- 18: Beleuchtungseinrichtung
- 19: Messstreifen
- 20: -
- 21: Druckbild
- 22: Zone, Farbzone
- 23: Weißfeld
- 24: Sensor, Bildsensor, Filter

- 22A: Farbzone
- 22B: Farbzone
- 22C: Farbzone
- 22D: Farbzone

- b22: Breite

- T: Transportrichtung

## Patentansprüche

1. Verfahren zur Farbregelung einer Druckmaschine, wobei die Farbregelung von einer Regeleinrichtung (12) ausgeführt wird, wobei ein Bedruckstoff (09) in einem laufenden Druckprozess der Druckmaschine fortlaufend bedruckt wird, wobei mindestens eine von einem Farbwerk (07) bereitgestellte Druckfarbe in mehreren Farbzonen (22; 22A; 22B; 22C; 22D) auf den Bedruckstoff (09) aufgetragen wird, wobei hinsichtlich der mindestens einen auf dem Bedruckstoff (09) aufgetragenen Druckfarbe in diesem Druckprozess innerhalb der Druckmaschine ein eine Färbdichte angebender Messwert ermittelt wird, wobei eine Relation zwischen dem Messwert der in einer ausgewählten Farbzone (22; 22B) für eine bestimmte Druckfarbe ermittelten Farbdichte zu einem in mindestens einer weiteren Farbzone (22; 22A; 22C) für dieselbe Druckfarbe ermittelten Messwert der Farbdichte gebildet wird, **dadurch gekennzeichnet, dass** als Relation der in benachbarten Farbzonen (22; 22A; 22B; 22C; 22D) in dem laufenden Druckprozess ermittelten Messwerte der Farbdichten eine Differenz einer optischen Dichte zwischen benachbarten Farbzonen (22; 22A; 22B; 22C; 22D) ermittelt wird oder dass zur Bildung der Relation mit Bezug auf die ausgewählte Farbzone (22; 22B) deren Messwert für eine Farbdichte mit einem Messwert aus mindestens einer anderen zu demselben Farbwerk (07) gehörenden Farbzone (22; 22A; 22C; 22D) ins Verhältnis gesetzt wird, wobei die Relation der Messwerte für Farbdichten zwischen verschiedenen Farbzonen (22; 22A; 22B; 22C; 22D) nur dann gebildet wird, wenn die bezüglich eines bestimmten Farbwerks (07) der Druckmaschine vorhandenen Farbzonen (22; 22A; 22B; 22C; 22D) in einer Anfahrphase der Druckmaschine mehrheitlich jeweils einen Messwert für die Farbdichte einer von diesem Farbwerk (07) bereitgestellten Druckfarbe liefern, welcher jeweils mindestens einen zuvor festgelegten Bruchteil eines in der jeweiligen Farbzone (22; 22A; 22B; 22C; 22D) voreingestellten Sollwertes erreicht, wobei die von der Regeleinrichtung (12) vorgenommene Farbregelung erst dann aktiv wird, nachdem die vorgenannte Bedingung am Ende der Anfahrphase der Druckmaschine erfüllt ist.

2. Verfahren nach Anspruch 1, **dadurch gekennzeichnet, dass** die Druckfarbe, von der deren Farbdichte betreffende Messwerte in Relation zueinander gesetzt werden, in mehreren quer zu einer Transportrichtung (T) des Bedruckstoffes (09) nebeneinander angeordneten Farbzonen (22; 22A; 22B; 22C; 22D) auf den Bedruckstoff (09) aufgetragen wird.

3. Verfahren nach Anspruch 1, **dadurch gekennzeichnet, dass** der Messwert für die Farbdichte der von dem betreffenden Farbwerk (07) bereitgestellten Druckfarbe mindestens 50% des in der jeweiligen Farbzone (22; 22A; 22B; 22C; 22D) voreingestellten Sollwertes erreicht.

4. Verfahren nach Anspruch 1, **dadurch gekennzeichnet, dass** der in der ausgewählten Farbzone (22; 22B) für die bestimmte Druckfarbe ermittelte Messwert der Farbdichte von der Regeleinrichtung (12) als nicht plausibel verworfen wird, wenn die Relation, die aus diesem Messwert zu dem in der mindestens einen weiteren Farbzone (22) zu derselben Druckfarbe ermittelten Messwert gebildet wird, mindestens eine Grenze unzulässig überschreitet oder unterschreitet.

5. Verfahren nach Anspruch 1, **dadurch gekennzeichnet, dass** von der Regeleinrichtung (12) anstelle des in der ausgewählten Farbzone (22; 22B) für eine bestimmte Druckfarbe ermittelten, von der Regeleinrichtung (12) als nicht plausibel verworfenen Messwertes der Farbdichte ersatzweise ein Wert für die Farbdichte der betreffenden Druckfarbe anhand der aus der mindestens einen weiteren Farbzone (22A; 22C) ermittelten Messwerte gewonnen wird.

6. Verfahren nach Anspruch 1, **dadurch gekennzeichnet, dass** die Relation zwischen dem Messwert der in der ausgewählten Farbzone (22; 22B) für eine bestimmte Druckfarbe ermittelten Farbdichte zu dem für dieselbe Druckfarbe in der mindestens einen weiteren Farbzone (22; 22A; 22C) ermittelten Messwert der Farbdichte zwischen unmittelbar benachbarten Farbzonen (22; 22A; 22B; 22C) und/oder zwischen weiter voneinander beabstandeten Farbzonen (22; 22A; 22B; 22C; 22D) gebildet wird.

7. Verfahren nach Anspruch 1, **dadurch gekennzeichnet, dass** von der Regeleinrichtung (12) die Relation zwischen dem Messwert der in einer ausgewählten Farbzone (22; 22B) für eine bestimmte Druckfarbe ermittelten Farbdichte zu einem in mindestens einer weiteren Farbzone (22; 22A; 22C) für dieselbe Druckfarbe ermittelten Messwert der Farbdichte während des laufenden Druckprozesses der Druckmaschine auf eine Veränderung geprüft wird.

8. Verfahren nach Anspruch 1, **dadurch gekennzeichnet, dass** erst in über 50% der zu einem bestimmten Farbwerk (07) gehörenden Farbzonen (22; 22A; 22B; 22C; 22D) die jeweilige Farbdichte jeweils zumindest den halben Wert des für die jeweilige Farbzone (22; 22A; 22B; 22C; 22D) voreingestellten Sollwertes erreichen muss, bevor die Regeleinrichtung (12) beginnt, einen in den jeweiligen Farbzonen (22; 22A; 22B; 22C; 22D) für die Farbdichte ermittelten Messwert auf seine Plausibilität zu prüfen.

9. Verfahren nach Anspruch 1, **dadurch gekennzeichnet, dass** zumindest die eine Farbdichte in einem laufenden Druckprozess unter Verwendung einer Zeilenkamera erfasst wird.

10. Verfahren nach Anspruch 1, **dadurch gekennzeichnet, dass** der auf seine Plausibilität zu prüfende Messwert densitometrisch oder farbmetrisch erfasst wird.

11. Verfahren nach Anspruch 1, **dadurch gekennzeichnet, dass** in mindestens einem Farbwerk (07) dieser Druckmaschine eine Einstellung von dessen Dosiereinrichtung in dem laufenden eine Oberfläche eines Bedruckstoffs (09) bedruckenden Druckprozess anhand von mindestens einem in diesem Druckprozess in der Druckmaschine erfassten Messwert von der Regeleinrichtung (12) änderbar ist.

12. Verfahren nach Anspruch 11, **dadurch gekennzeichnet, dass** die Regeleinrichtung (12) den erfassten Messwert vor einer Veränderung der Einstellung des betreffenden Farbwerks (07) auf Plausibilität prüft.

13. Verfahren nach Anspruch 12, **dadurch gekennzeichnet, dass** diese Plausibilitätsprüfung anhand einer Prüfung eines Remissionsverhaltens der Oberfläche des unbedruckten Bedruckstoffs (09) und einer Prüfung einer Relation einer in einem Messfeld (13) auf dem Bedruckstoff (09) ermittelten primären Farbdichte zu mindestens einer in demselben Messfeld (13) gleichzeitig ermittelten sekundären Farbdichte erfolgt.

14. Verfahren nach Anspruch 13, **dadurch gekennzeichnet, dass** die in dem betreffenden Messfeld (13) ermittelte primäre und sekundäre Farbdichte jeweils auf einen Referenzwert bezogen wird, welcher in der Prüfung des Remissionsverhaltens der Oberfläche des unbedruckten Bedruckstoffs (09) festgelegt worden ist.

15. Verfahren nach Anspruch 14, **dadurch gekennzeichnet, dass** die beiden die Plausibilität des erfassten Messwertes betreffenden Prüfungen gleichzeitig durchgeführt werden.

## Claims

1. Method for the ink regulation of a printing press, the ink regulation being carried out by a regulating device (12), a print substrate (09) being printed progressively in an ongoing printing process of the printing press, at least one printing ink provided by an inking unit (07) being applied to the print substrate (09) in a plurality of inking zones (22; 22A; 22B; 22C; 22D), a measurement indicating an ink density being determined within the printing press with regard to the at least one printing ink applied to the print substrate (09) in this printing process, a relationship being formed between the measurement of the ink density determined for a certain printing ink in a selected inking zone (22; 22B) to a measurement of the ink density determined for the same printing ink in at least one further inking zone (22; 22A; 22C), **characterized in that** a difference in an optical density between adjacent inking zones (22; 22A; 22B; 22C; 22D) in the ongoing printing process is determined as a relationship of the measurements of the ink densities determined in adjacent inking zones (22; 22A; 22B; 22C; 22D) or in that for the formation of the relationship with regard to the selected inking zone (22; 22B) its measurement for an ink density is related to a measurement from at least one other inking zone (22; 22A; 22C; 22D) belonging to the same inking unit (07), the relationship of the measurements for ink densities between different inking zones (22; 22A; 22B; 22C; 22D) only being formed if the inking zones (22; 22A; 22B; 22C; 22D) present with regard to a certain inking unit (07) of the printing press in each case yield a measurement for the ink density of a printing ink prepared by this inking unit (07) mostly in a start-up phase of the printing press, which in each case reaches at least a fraction of a nominal value pre-adjusted in the respective inking zone (22; 22A; 22B; 22C; 22D) fixed beforehand, the ink regulation performed by the regulating device (12) only becoming active after the aforementioned condition is satisfied at the end of the start-up phase of the printing press.

2. Method according to Claim 1, **characterized in that** the printing ink, by which measurements relating to its ink density are related to one another, is applied in a plurality of inking zones (22; 22A; 22B; 22C; 22D) arranged next to one another on the print substrate (09) transverse to a transport direction (T) of the print substrate (09).

3. Method according to Claim 1, **characterized in that** the measurement for the ink density of the printing ink prepared by the inking unit (07) concerned reaches at least 50% of the nominal value pre-adjusted in the respective inking zone (22; 22A; 22B; 22C; 22D).

4. Method according to Claim 1, **characterized in that** the measurement of the ink density determined in the selected inking zone (22; 22B) by the regulating device (12) for the specific printing ink is discarded as not plausible if the relationship which is formed from this measurement to the measurement determined on the same printing ink in the at least one further inking zone (22) inadmissibly exceeds or falls short of at least one limit.

5. Method according to Claim 1, **characterized in that** a value for the ink density of the printing ink concerned is alternatively obtained by the regulating device (12) with the aid of the measurements determined from the at least one further inking zone (22A; 22C), instead of the measurement of the ink density determined for a certain printing ink in the selected inking zone (22A; 22B) discarded as non-plausible by the regulating device (12).

6. Method according to Claim 1, **characterized in that** the relationship between the measurement of the ink density determined in the selected inking zone (22; 22B) for a certain printing ink to the measurement of the ink density determined for the same printing ink in the at least one further inking zone (22; 22A; 22C) is formed between immediately adjacent inking zones (22; 22A; 22B; 22C) and/or between inking zones (22; 22A; 22B; 22C; 22D) spaced further from one another.

7. Method according to Claim 1, **characterized in that** the relationship between the measurement of the ink density determined for a certain printing ink in a selected inking zone (22; 22B) and a measurement of the ink density determined in at least one further inking zone (22; 22A; 22C) for the same printing ink is checked by the regulating device (12) for a change during the ongoing printing process of the printing press.

8. Method according to Claim 1, **characterized in that** the respective ink density in each case must achieve at least half the value of the nominal value pre-adjusted for the respective inking zone (22; 22A; 22B; 22C; 22D) firstly in over 50% of the inking zones (22; 22A; 22B; 22C; 22D) belonging to a certain inking unit (07) before the regulating device (12) begins to check a measurement determined for the ink density in the respective inking zones (22; 22A; 22B; 22C; 22D) for its plausibility.

9. Method according to Claim 1, **characterized in that** at least the one ink density is recorded in an ongoing printing process using a line camera.

10. Method according to Claim 1, **characterized in that** the measurement to be checked for its plausibility is recorded densitometrically or colorimetrically.

11. Method according to Claim 1, **characterized in that** in at least one inking unit (07) of this printing press a setting of its metering device is adjustable in the ongoing printing process printing a surface of a print substrate (09) with the aid of at least one measurement recorded by the regulating device (12) in the printing press in this printing process.

12. Method according to Claim 11, **characterized in that** the regulating device (12) checks the recorded measurement for plausibility before a change in the adjustment of the inking unit (07) concerned.

13. Method according to Claim 12, **characterized in that** this plausibility testing takes place with the aid of a check of a remission behaviour of the surface of the printed print substrate (09) and a check of a relationship of a primary inking density determined in a measuring field (13) on the print substrate (09) to at least one secondary ink density determined simultaneously in the same measuring field (13).

14. Method according to Claim 13, **characterized in that** the primary and secondary ink density determined in the measuring field (13) concerned in each case is related to a reference value which has been fixed in the checking of the remission behaviour of the surface of the printed print substrate (09).

15. Method according to Claim 14, **characterized in that** the two checks relating to the plausibility of the recorded measurement are carried out simultaneously.

## Revendications

1. Procédé de régulation d'encre d'une machine à imprimer, ladite régulation d'encre étant exécutée par un dispositif de régulation (12), où un support d'impression (09) est imprimé en continu pendant un processus d'impression de la machine à imprimer en cours, au moins une encre d'impression fournie par un groupe d'encrage (07) étant appliquée en plusieurs zones d'encrage (22 ; 22A ; 22B ; 22C ; 22D) sur le support d'impression (09), une valeur de mesure indicatrice d'une densité d'encre étant déterminée relativement à l'encre ou aux encres d'impression appliquées sur le support d'impression (09) pendant ledit processus d'impression à l'intérieur de la machine à imprimer, une relation étant formée entre la valeur de mesure de la densité d'encre déterminée dans une zone d'encrage (22 ; 22B) sélectionnée pour une encre d'impression définie et une valeur de mesure de la densité d'encre déterminée dans au moins une autre zone d'encrage (22 ; 22A ; 22C) pour la même encre d'impression, **caractérisé en ce qu'**une différence de densité optique entre des zones d'encrage (22 ; 22A ; 22B ; 22C ; 22D) contiguës est déterminée en tant que relation entre valeurs de mesure des densités d'encre déterminées dans des zones d'encrage (22 ; 22A ; 22B ; 22C ; 22D) contiguës lors du processus d'impression en cours, ou **en ce que**, pour former la relation par rapport à la zone d'encrage (22 ; 22B) sélectionnée, la valeur de mesure de celle-ci pour une densité d'encre est mise en rapport avec une valeur de mesure d'au moins une autre zone d'encrage (22 ; 22A ; 22C ; 22D) appartenant au même groupe d'encrage (07), la relation des valeurs de mesure pour des densités d'encre entre différentes zones d'encrage (22 ; 22A ; 22B ; 22C ; 22D) n'étant formée que si, lors d'une phase de démarrage de la machine à imprimer, les zones d'encrage (22 ; 22A ; 22B ; 22C ; 22D) existant relativement à un groupe d'encrage (07) défini de la machine à imprimer délivrent majoritairement une valeur de mesure pour la densité d'encre d'une encre d'impression fournie par ledit groupe d'encrage (07) qui soit égale à au moins une fraction préalablement fixée d'une valeur de consigne préréglée dans la zone d'encrage (22 ; 22A ; 22B ; 22C ; 22D) correspondante, la régulation d'encre effectuée par le dispositif de régulation (12) n'étant activée qu'après satisfaction de la condition susmentionnée à la fin de la phase de démarrage de la machine à imprimer.

2. Procédé selon la revendication 1, **caractérisé en ce que** l'encre d'impression dont des valeurs de mesure relatives à la densité sont mises en relation entre elles, est appliquée sur le support d'impression (09) dans plusieurs zones d'encrage (22 ; 22A ; 22B ; 22C ; 22D) situées côte à côte perpendiculairement à un sens de transport (T) du support d'impression (09).

3. Procédé selon la revendication 1, **caractérisé en ce que** la valeur de mesure pour la densité de l'encre d'impression fournie par le groupe d'encrage (07) concerné représente au moins 50 % de la valeur de consigne préréglée dans la zone d'encrage (22 ; 22A ; 22B ; 22C ; 22D) correspondante.

4. Procédé selon la revendication 1, **caractérisé en ce que** la valeur de mesure de la densité d'encre déterminée dans la zone d'encrage (22 ; 22B) sélectionnée pour l'encre d'impression définie est rejetée comme non plausible par le dispositif de régulation (12) si la relation formée entre ladite valeur de mesure et la valeur de mesure déterminée dans la ou les autres zones d'encrage (22) pour la même encre d'impression est supérieure ou inférieure de manière inadmissible à au moins une limite.

5. Procédé selon la revendication 1, **caractérisé en ce qu'**au lieu de la valeur de mesure de densité d'encre dans la zone d'encrage (22 ; 22B) sélectionnée, déterminée pour une encre d'impression définie et rejetée comme non plausible par le dispositif de régulation (12), une valeur pour la densité d'encre d'impression concernée est délivrée en remplacement par le dispositif de régulation (12) sur la base des valeurs de mesure déterminées dans la ou les autres zones d'encrage (22A ; 22C).

6. Procédé selon la revendication 1, **caractérisé en ce que** la relation entre la valeur de mesure de la densité d'encre déterminée dans la zone d'encrage (22 ; 22B) sélectionnée pour une encre d'impression définie et la valeur de mesure de densité d'encre déterminée pour la même encre d'impression dans la ou les autres zones d'encrage (22 ; 22A ; 22C) est formée entre zones d'encrage (22 ; 22A ; 22B ; 22C) immédiatement contiguës et/ou entre zones d'encrage (22 ; 22A ; 22B ; 22C ; 22D) espacées entre elles.

7. Procédé selon la revendication 1, **caractérisé en ce que** le dispositif de régulation (12) recherche une variation de la relation entre la valeur de mesure de la densité d'encre déterminée dans une zone d'encrage (22 ; 22B) sélectionnée pour une encre d'impression définie et la valeur de mesure de densité d'encre déterminée pour la même encre d'impression dans la ou les autres zones d'encrage (22 ; 22A ; 22C) pendant le processus d'impression en cours de la machine à imprimer.

8. Procédé selon la revendication 1, **caractérisé en ce que** ce n'est que dans plus de 50 % des zones d'encrage (22 ; 22A ; 22B ; 22C ; 22D) appartenant à un groupe d'encrage (07) défini que la densité d'encre doit égaler au moins la demi-valeur de consigne préréglée pour chaque zone d'encrage (22 ; 22A ; 22B ; 22C ; 22D), avant que le dispositif de régulation (12) commence à contrôler la plausibilité d'une valeur de mesure déterminée pour la densité d'encre dans les zones d'encrage (22 ; 22A ; 22B ; 22C ; 22D).

9. Procédé selon la revendication 1, **caractérisé en ce qu'**au moins la première densité d'encre est déterminée en recourant à une caméra linéaire lors d'un processus d'impression en cours.

10. Procédé selon la revendication 1, **caractérisé en ce que** la valeur de mesure dont la plausibilité doit être contrôlée est saisie par densitométrie ou par colorimétrie.

11. Procédé selon la revendication 1, **caractérisé en ce que** dans au moins un groupe d'encrage (07) de ladite machine à imprimer, un réglage du dispositif de dosage de celui-ci peut être modifié par le dispositif de régulation (12) pendant le processus d'impression d'une surface d'un support d'impression (09), sur la base d'au moins une valeur de mesure déterminée dans la machine à imprimer lors dudit processus d'impression.

12. Procédé selon la revendication 11, **caractérisé en ce que** le dispositif de régulation (12) contrôle la plausibilité de la valeur de mesure déterminée avant de modifier le réglage du groupe d'encrage (07) concerné.

13. Procédé selon la revendication 12, **caractérisé en ce que** ledit contrôle de plausibilité est effectué sur la base d'un examen d'un comportement de rémission de la surface du support d'impression (09) non imprimé et d'un examen d'une relation entre une densité d'encre primaire déterminée dans un champ de mesure (13) sur le support d'impression (09) et au moins une densité d'encre secondaire simultanément déterminée dans le même champ de mesure (13).

14. Procédé selon la revendication 13, **caractérisé en ce que** les valeurs de densité d'encre primaire et secondaire déterminées dans le champ de mesure (13) concerné sont rapportées chacune à une valeur de référence ayant été fixée lors de l'examen du comportement de rémission de la surface du support d'impression (09) non imprimé.

15. Procédé selon la revendication 14, **caractérisé en ce que** les deux examens concernant la plausibilité de la valeur de mesure déterminée sont effectués simultanément.
